# EUROPÄISCHE PATENTANMELDUNG

(11) **EP 1 719 935 A2**
(43) Veröffentlichungstag der Anmeldung: **08.11.2006**
(21) Anmeldenummer: 06007773.2
(22) Anmeldetag: 13.04.2006
(51) Int. Cl.: F16H 63/34, F16H 63/20

(54) **Getriebeaktor für eine Kraftfahrzeug-Getriebeeinrichtung, Kraftfahrzeug-Getriebeeinrichtung mit einem solchen Getriebeaktor sowie Kraftfahrzeug-Antriebsstrang mit einer solchen Getriebeeinrichtung**

(30) Priorität: 07.05.2005 DE 102005020906
(71) Anmelder: LuK Lamellen und Kupplungsbau Beteiligungs KG, 77815 Bühl (DE)
(72) Erfinder: Kretz-Busch, Volker, 77833 Ottersweier (DE); Esly, Norbert, 77815 Bühl (DE)

(57) **Zusammenfassung**

Die Erfindung betrifft einen Getriebeaktor für eine Kraftfahrzeug-Getriebeeinrichtung (3), die für die Bildung von Gängen mehrere Übersetzungsstufen aufweist, wobei der Getriebeaktor (1) eine Schaltwelle (58,66) aufweist, die für das Schalten von Gängen drehbeweglich gelagert ist und die für das Wählen von Gängen und axial verschieblich gelagert ist, wobei der Getriebeaktor (1) ferner eine Kulisse (2) aufweist, wobei die Kulisse (2) ein fest angeordnetes erstes Kulissenteil (10) aufweist, welches insbesondere eine Welle oder eine Achse ist, sowie ein axialbeweglich und dreh- bzw. schwenkbeweglich angeordnetes zweites Kulissenteil (12), welches insbesondere eine Scheibe oder ein Blech ist und welches mit der Schaltwelle (58,66) gekoppelt ist, und wobei das erste Kulissenteil (10) mehrere axial beabstandete Vertiefungen (14,16,18,20,22) aufweist, in welche das zweite Kulissenteil (12) in Abhängigkeit seiner Axialstellung jeweils schwenkbar ist.

## Beschreibung

Die Erfindung betrifft einen Getriebeaktor für eine Kraftfahrzeug-Getriebeeinrichtung, eine Kraftfahrzeug-Getriebeeinrichtung mit einem Getriebeaktor sowie einen Kraftfahrzeug Antriebsstrang mit einer Kraftfahrzeug-Getriebeeinrichtung.

Neben Kraftfahrzeug-Getriebeeinrichtungen, mittels denen sich die Übersetzung zwischen dem Getriebeeingang und dem Getriebeausgang stufenlos verändern lässt, existieren beispielsweise auch solche, mittels welchen sich die angesprochene Übersetzung gestuft verändern lässt.

Ein Beispiel einer gestuften Kraftfahrzeug-Getriebeeinrichtung bildet das so genannte klassische Handschaltgetriebe, das eine Vielzahl von Radsätzen für die Bildung von Übersetzungsstufen bzw. Gänge aufweist, und bei dem die für Gangwechsel erforderlichen Antriebskräfte bzw. Energie komplett vom Fahrer des Kraftfahrzeuges aufgebracht wird.

Weiter sind beispielsweise (gestufte) Kraftfahrzeug-Getriebeeinrichtungen bekannt, die eine Vielzahl von Radsätzen für die Bildung von Übersetzungsstufen bzw. Gänge aufweisen, und bei denen die Energie bzw. die Kraft für Gangwechselvorgänge nicht oder zumindest nicht komplett vom Fahrer des Kraftfahrzeuges aufgebracht wird. Derartige Gestaltungen können auch als fremdkraftunterstützte Getriebeeinrichtungen bezeichnet werden. Getriebeeinrichtungen weisen häufig einen elektromechanischen Aktor auf. Mittels dieses Aktors, der die sog. äußere Getriebeschaltung bildet bzw. Bestandteil einer solchen ist, kann eine sog. innere Getriebeschaltung betätigt werden. Die innere Getriebeschaltung weist dabei eine Vielzahl von Mechanismen bzw. Endausgangsmechanismen auf. Jedem dieser Endausgangsmechanismen sind dabei - meist jeweils ein oder zwei - vorbestimmte Gänge des Getriebes zugeordnet, die mittels des betreffenden Endausgangsmechanismus, der hierzu mittels des Getriebeaktors entsprechend betätigt wird, ein- bzw. ausgelegt werden kann. Jeder dieser Endausgangsmechanismen weist dabei eine Schaltschiene, Schaltgabel oder dergleichen auf, die mit einem Eingriffsbereich versehen ist, in welchen der Aktor betätigend eingreifen kann. Dieser Eingriffsbereich wird in der Regel von zumindest einem Schaltmaul gebildet.

Weiter sind Gestaltungen der vorgenannten Art bekannt, bei denen der Aktor zumindest zwei Elektromotoren aufweist. Ein Elektromotor, der auch als Wählmotor bezeichnet wird, dient dabei zum Erzeugen von Wählbewegungen und ein zweiter Elektromotor, der auch als Schaltmotor bezeichnet wird, dient dabei zum Erzeugen von Schaltbewegungen. Weiter ist bekannt, dass der Wählmotor mit einer zentralen Schaltwelle so gekoppelt ist, dass er diese zum Wählen in deren Längsrichtung axial bewegen kann, und dass der Schaltmotor mit dieser zentralen Schaltwelle so gekoppelt ist, dass er diese zum Schalten um deren Längsachse drehend antreiben kann. An der Schaltwelle ist dabei ein Schaltfinger oder dergleichen vorgesehen, der mit der Schaltwelle bewegt wird, und bei einer Schaltbewegung entsprechend auf einen jeweiligen Endausgangsmechanismus bzw. Schaltschiene einwirken kann, und zwar in der Regel über deren bzw. dessen Schaltmaul.

Eine Gestaltung der zuvor erwähnten Art wird bekanntermaßen beispielsweise bei Automatisierten Schaltgetrieben (ASG) eingesetzt.

Auch bei Getrieben, die zwei parallel geschaltete Antriebsstrangzweige bzw. zwei parallel geschaltete Teilgetriebe aufweisen, wie beispielsweise Doppelkupplungsgetriebe (DKG) bzw. Parallelschaltgetriebe (PSG), werden bekanntermaßen Aktoren mit Elektromotoren eingesetzt. Da mit derartigen Getrieben in der Regel ein zugkraftunterbrechungsfreies Wechseln der Gänge angestrebt wird, wird bei derartigen Getrieben im Rahmen von Gangwechselvorgängen mittels Kupplungen oder dergleichen derart zwischen den Teilgetrieben umgeschaltet, wobei zunächst über einen Gang des einen Teilgetriebes ein Drehmoment übertragen wird, anschließend zwischenzeitlich zeitgleich ein Drehmoment über beide Teilgetriebe übertragen wird, und daran anschließend Drehmoment nur über einen Gang des anderen Teilgetriebes übertragen wird. Sofern beide Teilgetriebe jeweils mehrere Gänge aufweisen, muss in dem jeweils anderen Teilgetriebe der dort angestrebte Gang eingelegt werden - sofern er nicht bereits eingelegt ist - bevor in dem einen Teilgetriebe der Gang ausgelegt wird. Insbesondere vor diesem Hintergrund ist bekannt geworden, dass bei derartigen Getrieben Aktoren eingesetzt werden, die für jedes der beiden Teilgetriebe einen Wählmotor und einen Schaltmotor aufweisen, also insgesamt vier Elektromotoren.

Bei konventionell gestalteten gestuften Kraftfahrzeug-Getriebeeinrichtungen der vorgenannten Art laufen - ausgehend von dem alten Gang - die folgenden drei Schritte in zeitlicher Abfolge ab: "Auslegen des alten Ganges" - "Wählen" - "Einlegen des Zielganges".

Darüber hinaus sind hat die Anmelderin eine Kraftfahrzeug-Getriebeeinrichtung entwickelt, bei der das Wählen bzw. Wählbewegungen vor dem Auslegen des alten Ganges stattfinden kann, bzw. einen Kraftfahrzeug-Getriebeaktor, der mit nur einem Elektromotor auskommt, welcher sowohl die Antriebsbewegungen für das Wählen als auch die Antriebsbewegungen für das Schalten liefert, und daher auch als 1-Motor-Getriebeaktor bezeichnet werden kann.

Bei solchen Gestaltungen ist beispielsweise vorgesehen, dass Einlegegeometrien bzw. ein Hauptbetätigungselement bzw. ein Schaltfinger im Wesentlichen nur für das Einlegen von Gängen zuständig ist und zusätzliche Geometrien die Funktion des Auslegens von Gängen übernehmen. Dabei werden insbesondere Auslegegeometrien bzw. so genannte Nebenbetätigungselemente für die Auslegefunktion verwendet. Es kann dabei beispielsweise vorgesehen sein, dass sich die zusätzlichen Geometrien einerseits beispielsweise an einer zentralen Schaltwelle befinden und andererseits an Schaltmäulern, die an den genannten Mechanismen bzw. Endausgangsmechanismen bzw. Schaltgabeln oder Schaltschienen oder dergleichen vorgesehen sind, was aber auch abweichend gestaltet sein kann.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist.

Beispiele für derartige Gestaltungen mit Active Interlock bzw. für 1-Motor-Getriebeaktoren sind beispielsweise in der DE 102 06 561 A1 der Anmelderin erläutert.

Der Erfindung liegt die Aufgabe zugrunde, einen einfach gestalteten Kraftfahrzeug-Getriebeaktor zu schaffen, mittels welchem sich betriebssicher die Gänge eines Kraftfahrzeuggetriebes ein- und auslegen lassen.

Erfindungsgemäß wird ein Getriebeaktor gemäß Anspruch 1 oder gemäß Anspruch 10 vorgeschlagen. Eine erfindungsgemäße Kraftfahrzeug-Getriebeeinrichtung ist Gegenstand des Anspruchs 13. Ein erfindungsgemäßer Kraftfahrzeug-Antriebsstrang ist Gegenstand des Anspruchs 16. Bevorzugte Gestaltungen sind Gegenstand der Unteransprüche.

Erfindungsgemäß wird insbesondere ein Kraftfahrzeug-Getriebeaktor für ein Kraftfahrzeug-Getriebeeinrichtung vorgeschlagen. Beispielhafte Gestaltungen einer solchen Kraftfahrzeug-Getriebeeinrichtung, für die der erfindungsgemäße Kraftfahrzeug-Getriebeaktor bestimmt ist, werden im folgenden noch erläutert. Der Getriebeaktor weist eine Schaltwelle auf, die für das Schalten von Gängen drehbeweglich gelagert ist. Der Getriebeaktor weist ferner eine Kulisse auf. Die Kulisse weist ein fest angeordnetes erstes Kulissenteil auf sowie ein axial beweglich und dreh- bzw. schwenkbeweglich angeordnetes zweites Kulissenteil, oder besteht aus diesen beiden Kulissenteilen. Das erste Kulissenteil ist insbesondere nach Art einer Welle bzw. Achse ausgebildet. Das zweite Kulissenteil kann beispielsweise eine Scheibe sein, und ist in bevorzugter Gestaltung ein Blech. Das zweite Kulissenteil ist mit der Schaltwelle gekoppelt. Diese Kopplung kann beispielsweise so sein, dass das zweite Kulissenteil relativ zur Schaltwelle axial fest angeordnet ist, so dass das zweite Kulissenteil axial bewegt wird, wenn die Schaltwelle axial bewegt wird und dass das zweite Kulissenteil relativ zur Schaltwelle drehbeweglich gelagert ist und mit der Schaltwelle bezüglich seiner Drehbewegung in treibender Verbindung steht. Eine solche treibende Verbindung kann beispielsweise mittels einer Verzahnungsanordnung realisiert sein. Es kann aber auch vorgesehen sein, dass die Kopplung zwischen dem zweiten Kulissenteil und der Schaltwelle so ist, dass das zweite Kulissenteil axial fest und drehfest mit der Schaltwelle verbunden ist, so dass das zweite Kulissenteil an der Drehbewegung der Schaltwelle sowie eine Axialbewegung der Schaltwelle jeweils folgt. Es ist vorgesehen, dass das erste Kulissenteil mehrere axial beabstandete Vertiefungen aufweist, in welche das zweite Kulissenteil in Abhängigkeit seiner axialen Stellung jeweils schwenkbar ist.

Es ist bevorzugt vorgesehen, dass die Kulisse bewirkt, dass die Verdrehbarkeit der Schaltwelle von der Axialstellung dieser Schaltwelle abhängt und / oder dass die Axialbeweglichkeit der Schaltwelle von Schwenk- bzw. Verdrehstellung der Schaltwelle abhängt.

Das mit mehreren axial beabstandeten Vertiefungen versehene erste Kulissenteil kann beispielsweise eine mit Einstichen versehene Achse oder Welle sein. Insbesondere kann dies so sein, dass mehrere axial beabstandete Nuten, insbesondere Ringnuten, in der, insbesondere zylindrischen, Mantelfläche einer solchen Welle bzw. Achse vorgesehen sind, die sich jeweils um die Längsachse dieser Welle bzw. Achse erstrecken. Die axial beabstandeten Vertiefungen können also insbesondere Nuten bzw. Einstiche sein. Wie angesprochen ist das zweite Kulissenteil an Abhängigkeit seiner Axialstellung jeweils in die axial beabstandeten Vertiefungen des ersten Kulissenteils schwenkbar. Dies ist insbesondere so zu verstehen, dass ein wenigstens ein Bereich bzw. Abschnitt dieses zweiten Kulissenteils in die entsprechenden Vertiefungen bewegbar bzw. schwenkbar ist. Die entsprechende Schwenkachse kann dabei außerhalb der Vertiefungen liegen. In vorteilhafter Ausgestaltung ist vorgesehen, dass genau eine definierte Schwenkachse für das zweite Kulissenteil vorgesehen ist, die beim Schwenken quer zu ihrer Erstreckungsrichtung nicht wandert. Es kann aber auch vorgesehen sein, dass ein Schwenkmechanismus derart ausgebildet ist, dass die Schwenkachse beim Schwenken quer zu ihrer Erstreckungsrichtung wandert.

Insbesondere ist vorgesehen, dass die Schwenkachse des zweiten Kulissenteils und die Position des ersten Kulissenteils, insbesondere die Lage dessen Vertiefungen, sowie der radiale Abstand des Bereichs bzw. der Bereiche des zweiten Kulissenteils, der in die entsprechenden Vertiefungen schwenken kann, von der Schwenkachse des zweiten Kulissenteils so gewählt ist, dass der entsprechende Bereich des zweiten Kulissenteils, der in die entsprechenden Vertiefungen schwenken kann, in diese hinein und hinaus geschwenkt werden kann.

Es kann - wie bereits angesprochen - vorgesehen sein, dass das zweite Kulissenteil ein Blech ist. Es kann insbesondere ein Blech konstanter Dicke sein. Es kann aber auch vorgesehen sein, dass das Blech in seiner Dicke variiert. In dem Bereich bzw. in den Bereichen des Blechs bzw. zweiten Kulissenteils, die in die Vertiefungen des ersten Kulissenteils schwenkbar sind, ist das Blech bzw. zweite Kulissenteile so dimensioniert, dass diese Schwenkbarkeit in die Vertiefungen tatsächlich ermöglicht wird. Das dazu insbesondere geringer als die entsprechende Höhe der Vertiefungen ist. Die Kulisse ist vorzugsweise mechanisch bzw. rein mechanisch ausgebildet.

Es ist insbesondere vorgesehen, dass die zentrale Längsachse der Schaltwelle parallel zur Längsachse des ersten Kulissenteils gelegen ist.

Eine Kulisse ist insbesondere eine Einrichtung, insbesondere Führungseinrichtung, welche die Verstellbarkeit des Aktors, insbesondere einer Schaltwelle des Aktors, im Wesentlichen auf eine Verstellbarkeit entsprechend einer Schaltgassen-Wählgassen-Anordnung beschränkt.

Die Anzahl der axial beabstandeten Vertiefungen des ersten Kulissenteils entspricht in vorteilhafter Gestaltung der Anzahl der Schaltgassen des Getriebeaktors. Insbesondere bei einer solchen Gestaltung kann vorgesehen sein, dass stets der gleiche Bereich bzw. die gleichen Bereiche des zweiten Kulissenteils - bei entsprechender Axialstellung - in die entsprechenden Vertiefungen des ersten Kulissenteils schwenkbar ist, so dass der bzw. die Bereiche des zweiten Kulissenteils, der bzw. die in Vertiefungen des ersten Kulissenteils schwenkbar sind, nicht von der Identität der jeweiligen Vertiefung abhängt. Ferner ist es insbesondere vorgesehen, dass Zwischenstellungen des zweiten Kulissenteils existieren, in denen dieses zweite Kulissenteil nicht in eine der axial beabstandeten Vertiefungen des ersten Kulissenteils schwenkbar ist. Die axial beabstandeten Vertiefungen des ersten Teils können jeweils von Wandabschnitten begrenzt sein, die mit Einführfasen versehen sind. Hierdurch kann insbesondere erreicht werden, dass beispielsweise bei steuerungsbedingten Fehlstellungen in Wählrichtung, durch welche die Wählposition einer anzufahrenden Gang- bzw. Schaltgasse nicht erreicht ist, dennoch in diese angestrebte Schalt- bzw. Ganggasse gefahren werden kann, wobei über die Einführfasen eine entsprechende Korrektur der Wählstellung erreicht wird. In entsprechender Weise können derartige Einführfasen - alternativ oder ergänzend - am zweiten Kulissenteil vorgesehen sein, und zwar insbesondere in dem Bereich, der dafür bestimmt ist, in die entsprechenden Vertiefungen des ersten Kulissenteils hineingeschwenkt zu werden.

Die Einführfasen sind vorteilhafterweise groß ausgebildet.

Es kann vorgesehen sein, dass solche Einführfasen - in axialer Richtung - beidseits angeordnet sind, also jeweils an den Wandabschnitten des ersten Kulissenteils, die die Schaltgasse in den entgegen gesetzten Orientierungen der Axialrichtung begrenzen bzw. axial im Bereich der beiden Enden des bzw. der Bereiche des zweiten Kulissenteils, welche in den entsprechenden Vertiefungen des ersten Kulissenteils schwenkbar sind.

In besonders vorteilhafter Gestaltung ist vorgesehen, dass die axial beabstandeten Vertiefungen des ersten Kulissenteils verschiedenen Schaltgassen des Getriebeaktors zugeordnet sind. Dabei ist insbesondere vorgesehen, dass in den Stellungen des Getriebeaktors, in denen er außerhalb einer Schaltgasse positioniert ist bzw. aus welchen er nicht in eine Schaltgasse geschaltet werden kann, das erste und das zweite Kulissenteil zum Blockieren einer Schwenkbarkeit des zweiten Kulissenteils jeweils im wesentlichen formschlüssig ineinander greifen. Dieses formschlüssige Ineinandergreifen ist insbesondere so, dass durch den Formschluss zwar die Schwenkbarkeit des zweiten Kulissenteils blockiert wird, die Bewegung in Wählrichtung bzw. in Axialrichtung des zweiten Kulissenteils allerdings gewährleistet ist. Dies ist insbesondere so, dass zumindest eine Schwenkstellung oder ein Schwenkstellungsbereich des zweiten Kulissenteils existiert, in welcher bzw. welchem dieses axial bzw. in Wählrichtung so bewegt werden kann, dass sämtliche Axialstellungen anfahrbar sind, aus welchen es in die Vertiefungen schwenkbar ist. In Zwischenstellungen zwischen diesen Axialstellungen, in denen die Schwenkbarkeit gegeben ist, ist dabei insbesondere die Schwenkbeweglichkeit dieses zweiten Kulissenteils blockiert.

In vorteilhafter Gestaltung ist vorgesehen, dass in Stellungen des zweiten Kulissenteils, in welchen dieses in eine Vertiefung der axial beabstandeten Vertiefungen des ersten Kulissenteils verschwenkt ist, ein Formschluss zwischen dem ersten und dem zweiten Kulissenteil in Wählrichtung bzw. in Axialrichtung des ersten Kulissenteils gegeben ist. Dieser Formschluss ist insbesondere so, dass ein Wählen bzw. eine Axialbewegung des zweiten Kulissenteils, und somit insbesondere eine Axialbewegung bzw. Wählbewegung der Schaltwelle, gesperrt bzw. blockiert ist. Der Formschluss ist aber vorteilhafterweise nicht so, dass ein Verschwenken des zweiten Kulissenteils dieser formschlüssigen Stellung verhindert wird.

Der Getriebeaktor ist vorzugsweise ais 1-Motor-Getriebeaktor ausgebildet ist. Dies ist insbesondere so, dass der Getriebeaktor genau einen Elektromotor aufweist, mittels welchem die Antriebsbewegung für das Wählen von Gängen sowie für das Schalten von Gängen erzeugbar ist.

In vorteilhafter Weiterbildung der Erfindung ist vorgesehen, dass der Getriebeaktor für eine Kraftfahrzeug-Getriebeeinrichtung vorgesehen ist, die eine innere Getriebeschaltung mit mehreren Endausgangmechanismen aufweist, mittels welchen die Gänge der Kraftfahrzeug-Getriebeeinrichtung ein- und auslegbar sind, wobei der Getriebeaktor wenigstens ein Hauptbetätigungselement, wie beispielsweise Schaltfinger, für das Betätigen der Endausgangsmechanismen zum Einlegen von Gängen aufweist, sowie mehrere Nebenbetätigungselemente für das Betätigen von Endausgangsmechanismen zum Auslegen von Gängen. Dabei ist vorgesehen, dass es wenigstens ein Hauptbetätigungselement für das Wählen von Gängen axialbeweglich und für das Schalten bzw. Einlegen von Gängen drehbeweglich ist. Ferner ist bei dieser Gestaltung vorgesehen, dass die Nebenbetätigungselemente für das Auslegen von Gängen drehbeweglich sind. Es ist dabei insbesondere vorgesehen, dass das wenigstens eine Hauptbetätigungselement und die Nebenbetätigungselemente an bzw. auf der Schaltwelle angeordnet sind. Diese Anordnung kann beispielsweise axial- und drehfest sein.

Vorzugsweise ist der Getriebeaktor mit einem Active-Interlock-Mechanismus versehen bzw. so gestaltet, dass er mit einer inneren Getriebeschaltung eine Kraftfahrzeug-Getriebeeinrichtung nach Art eines Active-Interlock-Mechanismus zusammenwirken kann.

Erfindungsgemäß wird ferner insbesondere ein Getriebeaktor vorgeschlagen - und dieser kann insbesondere auch eine bevorzugte Weiterbildung der vorgenannten Gestaltungen sein - für eine Kraftfahrzeug-Getriebeeinrichtung, die für die Bildung von mehreren Gängen Übersetzungsstufen aufweist und die eine innere Getriebeschaltung mit mehreren Endausgangsmechanismen aufweist, von denen einer für das Betätigen des Rückwärtsganges der Getriebeeinrichtung ist und von denen die verbleibenden für das Betätigen der Vorwärtsgänge der Getriebeeinrichtung sind. Dabei weist der Getriebeaktor zumindest ein Hauptbetätigungselement, wie Schaltfinger, für das Betätigen der den Vorwärtsgängen zugeordneten Endausgangsmechanismen zum Einlegen von Gängen auf, sowie mehrere Nebenbetätigungselemente für das Betätigen der den Vorwärtsgängen zugeordneten Endausgangsmechanismen zum Auslegen von Gängen. Überdies weist der Getriebeaktor ein Betätigungselement, wie beispielsweise Schaltfinger, für das Betätigen des dem Rückwärtsgang zugeordneten Endausgangmechanismus zum Einlegen und zum Auslegen des Rückwärtsganges auf. Eine derartige Gestaltung kann beispielsweise so sein, dass das Hauptbetätigungselement und die Nebenbetätigungselemente Bestandteil eines Active Interlock Mechanismus für die Vorwärtsgänge sind, der so ist, dass dieser Active-Interlock-Mechanismus sicherstellt, dass in dem Getriebe bzw. einem jeweiligen Teilgetriebe dieses Getriebes jeweils nur ein Vorwärtsgang gleichzeitig eingelegt sein kann. Dabei ist insbesondere vorgesehen, dass das Hauptbetätigungselement, mittels welchem sich Vorwärtsgänge einlegen lassen, nach dem Einlegen eines Vorwärtsganges in seiner Neutralstellung zurückbewegt werden kann, ohne dass dieser Vorwärtsgang dabei wieder ausgelegt wird. Für das Auslegen der Vorwärtsgänge sind vielmehr die Nebenbetätigungselemente des Active Interlock Mechanismus zuständig.

Im Hinblick auf den Rückwärtsgang ist dort allerdings ein Betätigungselement vorgesehen, welches sowohl für das Einlegen als auch für das Auslegen des Rückwärtsganges zuständig ist. Dieses Betätigungselement ist insbesondere (ebenfalls) ein Schaltfinger.

Es ist also insbesondere das Hauptbetätigungselement mit den Nebenbetätigungselementen derart funktionsverbunden, dass sichergestellt wird, dass sämtliche verbleibenden Vorwärtsgänge des Getriebes bzw. des gleichen Teilgetriebes ausgelegt sind, bevor mittels des Hauptbetätigungselements ein neuer Zielgang eingelegt wird. Es kann ferner vorgesehen sein, dass das Betätigungselement, welches für das Ein- und Auslegen des Rückwärtsganges vorgesehen ist, mit den Nebenbetätigungselementen derart funktionsverbunden ist, dass sichergestellt wird, dass sämtliche Gänge des Getriebes bzw. des gleichen Teilgetriebes, in welchem der Rückwärtsgang vorgesehen ist, ausgelegt sind, bevor der Rückwärtsgang eingelegt wird, wozu die Nebenbetätigungselemente vorgesehen sind. Allerdings ist insbesondere nicht vorgesehen, dass die Nebenbetätigungselemente bzw. ein Nebenbetätigungselement auf den Rückwärtsgang wirkt, wenn ein Vorwärtsgang eingelegt werden soll.

Zum Auslegen des Rückwärtsganges ist nämlich insbesondere das Betätigungselement, welches für das Ein- und Auslegen des Rückwärtsganges zuständig ist, vorgesehen.

In einer besonders zu bevorzugenden Weiterbildung weist der Getriebeaktor ein erstes Sperrteil auf, das sperrend auf den dem Rückwärtsgang zugeordneten Endausgangsmechanismus einwirken kann, um diesen in einer Neutralstellung zu halten, also in einer Stellung, in welcher der Rückwärtsgang ausgelegt ist. Ein solches erstes Sperrteil kann beispielsweise als (erster) Sperrzylinder ausgestaltet sein. Der (erste) Sperrzylinder kann beispielsweise an der Schaltwelle angeordnet sein, und zwar insbesondere konzentrisch. Dabei ist vorgesehen, dass das wenigstens eine Hauptbetätigungselement für das Einlegen von Gängen drehbeweglich und für das Wählen von Gängen axial beweglich angeordnet ist. Wie bereits angesprochen, kann ein solches Hauptbetätigungselement beispielsweise als Schaltfänger ausgestaltet sein und an der Schaltwelle fixiert sein. Ferner ist bei der Weiterbildung vorgesehen, dass die Nebenbetätigungselemente für das Auslegen von Vorwärtsgängen drehbeweglich angeordnet sind. Diese Nebenbetätigungselemente sind vorzugsweise ebenfalls fest an der Schaltwelle angeordnet und beispielsweise nach Art von radial vorstehenden Flügeln gestaltet. Weiter ist gemäß dieser bevorzugten Gestaltung vorgesehen, dass das Betätigungselement, das für das Einlegen und für das Auslegen des Rückwärtsganges vorgesehen ist, für das Wählen axialbeweglich und für das Ein- und Auslegen des Rückwärtsganges drehbeweglich ist. Gemäß dieser bevorzugten Gestaltung erstreckt sich das erste Sperrteil axial über eine Länge, die mindestens so groß ist wie der maximale axiale Abstand zweier Stellungen des wenigstens einen Hauptbetätigungselements, aus denen jeweils durch Verdrehen dieses Hauptbetätigungselements ein einem Vorwärtsgang zugeordneter Endausgangsmechanismus zum Einlegen eines Vorwärtsgangs betätigbar ist. Dies ist insbesondere so, dass sichergestellt wird, dass beliebige Vorwärtsgänge nacheinander schaltbar sind, wobei bei diesem Schaltvorgang stets sichergestellt ist, dass der Rückwärtsgang in der Sperr- ausgelegten Stellung ist. Es ist also insbesondere vorgesehen, dass der Rückwärtsgang dauerhaft in einer Sperrstellung beim Wechseln von Vorwärtsgängen gehalten wird. Weiter ist insbesondere vorgesehen, dass nach dem Einlegen eines Vorwärtsganges dieser eingelegt bleibt, wenn das Hauptbetätigungselement, mit dem zuvor dieser Vorwärtsgang eingelegt wurde, in seine Neutralstellung zurückbewegt wird, aus welcher gewählt werden kann. Der Rückwärtsgang wird hingegen bei dieser bevorzugten Gestaltung unmittelbar wieder ausgelegt, wenn er zuvor mittels des entsprechenden Betätigungselements eingelegt wird und dieses in seine Neutralstellung zurückbewegt wird.

Ferner wird erfindungsgemäß insbesondere eine Kraftfahrzeug-Getriebeeinrichtung mit mehreren Übersetzungsstufen für die Bildung von Gängen vorgeschlagen, die ferner eine innere Getriebeschaltung sowie einen Getriebeaktor für die Betätigung der inneren Getriebeschaltung aufweist. Bei dieser Gestaltung ist der Getriebeaktor als erfindungsgemäßer Getriebeaktor ausgebildet.

Die Kraftfahrzeug-Getriebeeinrichtung ist vorzugsweise ein Parallelschaltgetriebe (PSG) oder ein unterbrechungsfreies Schaltgetriebe (USG) oder ein Doppelkupplungsgetriebe (DKG).

Die innere Getriebeschaltung weist insbesondere mehrere Endausgangsmechanismen auf, die bereits schon zuvor erwähnt wurden. Solche Endausgangsmechanismen können so sein, dass sie mehrere Schaltschienen aufweisen, die jeweils mit einem Schaltmaul versehen sind. Dieses Schaltmaul ist dazu bestimmt, dass das wenigstens eine Hauptbetätigungselement bzw. die Nebenbetätigungselemente bzw. ein Betätigungselement für den Rückwärtsgang hierein betätigend eingreifen kann, um den entsprechenden Endausgangsmechanismus zu bewegen, und insbesondere die Schaltschiene axial bzw. in Richtung ihrer Längserstreckungsrichtung zu bewegen. Der jeweilige Endausgangsmechanismus kann neben einer solchen Schaltschiene eine unmittelbar oder über zwischengeschaltete Elemente mit der Schaltschiene gekoppelte Schiebemuffe aufweisen. Die die Gänge bildenden Übersetzungsstufen können (Zahn)Radsätze aufweisen, von denen ein Zahnrad auf einer dieses Zahnrad tragenden Welle fest angeordnet ist und von denen ein anderes Zahnrad auf einer dieses andere Zahnrad tragenden Welle relativ zu dieser Welle drehbeweglich angeordnet ist. Beispielsweise über die Schiebemuffe bzw. eine Gangkupplung oder ein funktionsgleiches Element kann dann eine drehfeste Verbindung zwischen dem drehbeweglich angeordneten Zahnrad bzw. Losrad und der dieses Zahnrad tragenden Welle erzeugt werden, so dass über die angesprochenen Wellen und die jeweilige Zahnradstufe ein Drehmoment übertragen werden. Zu diesem Zweck kann vorgesehen sein, dass durch Betätigung der entsprechenden Schaltschiene die entsprechende Schiebemuffe bzw. Gangkupplung entsprechend bewegt wird, um die angesprochene drehfeste Verbindung zwischen einem jeweiligen Zahnrad und der zugehörigen Welle zu erzeugen oder zu lösen. Die Schaltschienen sind vorzugsweise axialbeweglich bzw. in Richtung ihrer Längserstreckung beweglich angeordnet.

Ferner kann vorgesehen sein, dass die Endausgangsmechanismen Synchronisationseinrichtungen aufweisen.

Erfindungsgemäß wird ferner ein Kraftfahrzeug-Antriebsstrang mit einer erfindungsgemäßen Getriebeeinrichtung vorgeschlagen.

Im folgenden sollen nun beispielhafte Gestaltungen der Erfindung anhand der Figuren näher erläutert werden. Es zeigt:
Fig. 1 bis 4 eine erste beispielhafte Ausführungsform eines erfindungsgemäßen Getriebeaktors in teilweiser Ansicht, wobei diese Fig. mehrere Ansichten zeigen;
Fig. 5 und 6 eine zweite beispielhafte Ausführungsform eines erfindungsgemäßen Getriebeaktors in teilweiser Ansicht, wobei diese Fig. mehrere Ansichten zeigen;
Fig. 7 bis 10 eine beispielhafte Ausführungsform eines erfindungsgemäßen Getriebeaktors in teilweiser Ansicht, wobei diese Fig. mehrere Ansichten zeigen;
Fig. 11 bis 14 eine beispielhafte Ausführungsform eines erfindungsgemäßen Getriebeaktors in teilweiser Ansicht, wobei diese Fig. mehrere Ansichten zeigen;
Fig. 15 einen beispielhaften Schalthebel, der beispielsweise Bestandteil des Getriebeaktors gemäß Fig. 1 bis 4 oder gemäß Fig. 5 und 6 oder gemäß Fig. 7 bis 10 oder gemäß Fig. 11 bis 14 sein kann;
Fig. 16 ein beispielhafte Weiterbildung der Erfindung, die beispielsweise auch bei der Gestaltung gemäß Fig. 1 bis 4 oder bei der Gestaltung gemäß Fig. 5 und 6 oder bei der Gestaltung gemäß Fig. 7 bis 10 oder bei der Gestaltung gemäß Fig. 11 bis 14 gegeben sein kann;
Fig. 17 und 18 einen beispielhaftes Hohlrad in zwei Ansichten, das beispielsweise Bestandteil des Getriebeaktors gemäß Fig. 1 bis 4 oder gemäß Fig. 5 und 6 oder gemäß Fig. 7 bis 10 oder gemäß Fig. 11 bis 14 sein kann; und
Fig. 19 eine beispielhafte Einheit mit einem Hohlrad und einer Spindel, wobei diese Einheit beispielsweise Bestandteil des Getriebeaktors gemäß Fig. 1 bis 4 oder gemäß Fig. 5 und 6 oder gemäß Fig. 7 bis 10 oder gemäß Fig. 11 bis 14 sein kann.

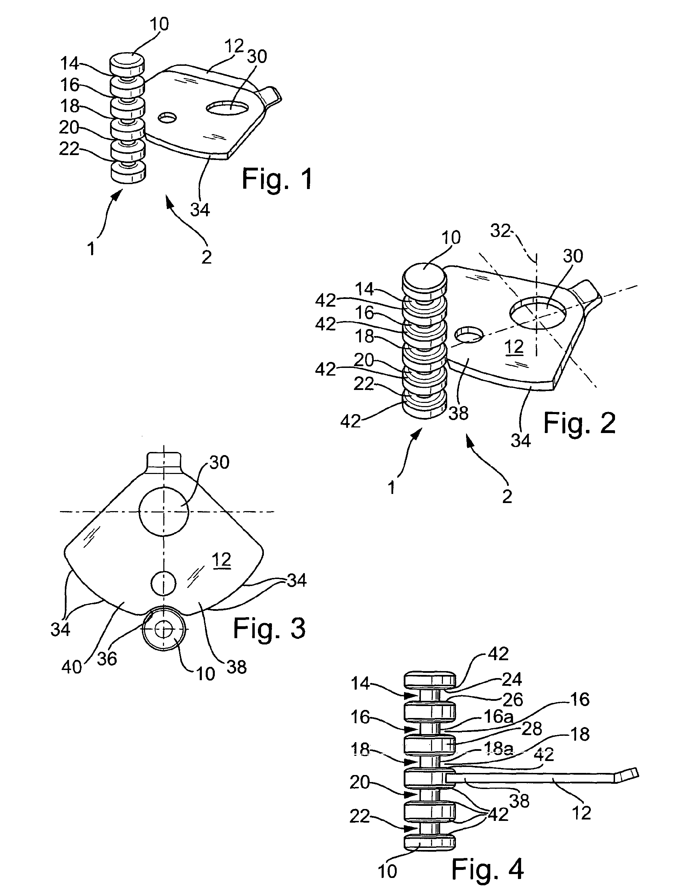

Die Fig. 1 bis 4 zeigen eine beispielhafte Ausführungsform eines erfindungsgemäßen Getriebeaktors in vier teilweisen Ansichten. Dargestellt ist dort insbesondere die Kulisse bzw. Schaltkulisse 2 eines Getriebeaktors 1. In den Fig. 1 und 2 ist diese Kulisse 2 in zwei Schrägansichten gezeigt. In Fig. 3 ist die Kulisse 2 in einer Draufsicht gezeigt und in Fig. 4 ist die Schaltkulisse 2 in einer Seitenansicht gezeigt.

Die Kulisse 2 wird im Wesentlichen durch zwei Bauteile gebildet, nämlich durch das erste Kulissenteil 10 sowie das zweite Kulissenteil 12. Das erste Kulissenteil 10 ist im Ausführungsbeispiel eine mit mehreren Einstichen bzw. Nuten 14, 16, 18, 20, 22 versehene Kulissenachse bzw. -welle 10. Die Nuten 14, 16, 18, 20, 22 sind hier als Ringnuten ausgebildet. Die Achse bzw. Welle 10 sitzt in axialer Richtung fest in einem Gehäuse - was in den Fig. 1 bis 4 nicht dargestellt ist. Dieses Gehäuse kann beispielsweise ein Gehäuse des Getriebeaktors sein. Es kann auch vorgesehen sein, dass die Kulissenachse bzw. -welle so im (Aktor)Gehäuse fixiert ist, dass sie dreh- und axialfest dort angeordnet ist.

Die Nuten 14, 16, 18, 20, 22 sind axial beabstandet, so dass sie axial beidseitig von Wandabschnitten begrenzt werden, die beispielhaft für die Nut 14 in Fig. 4 mit den Bezugszeichen 24 und 26 versehen sind, und bei den Nuten 16, 18, 20, 22 entsprechend gegeben sind. Zwischen zwei jeweils benachbarten Nuten 14, 16 bzw. 16, 18 bzw. 18, 20 bzw. 20, 22 wird also jeweils ein gegenüber dem jeweiligen Nutgrund der benachbarten Nuten radial vorstehender Vorsprung gebildet, der auch als Erhöhung oder Profilierungserhöhung bezeichnet wird. Dies ist beispielhaft für radialen Vorsprung 28 in Fig. 4 gezeigt, der dort zwischen den Nuten 16 und 18 gebildet wird. Der entsprechende Nutgrund der Nuten 16, 18 ist mit den Bezugzeichen 16a bzw. 18a versehen. Auch axial außen der axial außen liegenden Nuten bzw. Einstiche 14, 22 wird jeweils ein radialer Vorsprung gebildet.

Das zweite Kulissenteil 12 ist in diesem Ausführungsbeispiel ein Blech und wird auch als Zwischenblech oder Kulissenblech bezeichnet. Das Kulissenblech 12 ist auf der Schaltwelle des Getriebeaktors 1 befestigt. Diese Schaltwelle ist in den Fig. 1 bis 4 zwar nicht gezeigt; gezeigt ist allerdings, dass das Kulissenblech 12 eine Durchgangsöffnung 30 für die Aufnahme der Schaltwelle aufweist. Die Schaltwelle erstreckt sich durch diese Durchgangsöffnung 30. Dabei ist insbesondere vorgesehen, dass die Schaltwelle drehfest und axialfest mit dem Kulissenblech 12 verbunden ist. Es kann aber auch vorgesehen sein, dass das Kulissenblech 12 an der Schaltwelle fixiert ist und die Schaltwelle sich nicht durch eine Durchgangsöffnung 30 des Kulissenblechs 12 erstreckt.

Die zentrale Längsachse der nicht dargestellten Schaltwelle ist in Fig. 2 schematisch durch das Bezugszeichen 32 angedeutet. Diese zentrale Längsachse 32 der Schaltwelle erstreckt sich im Wesentlichen parallel zur Längsachse des ersten Kulissenteils 10.

Das zweite Kulissenteil bzw. das Kulissenblech 12 ist in diesem Ausführungsbeispiel nach Art eines Kreissektors gestaltet, der hier in etwa 90° überdeckt. Es können aber auch andere Formen gegeben sein, wie beispielsweise eine halbkreisförmige Ausbildung oder eine kreisförmige Ausbildung. In diesem Ausführungsbeispiel bildet ein radial außen gelegener Abschnitt des zweiten Kulissenteils bzw. Kulissenblechs 12, der in den Fig. 1 bis 3 mit dem Bezugszeichen 34 versehen ist, im senkrecht zur Längsachse 32 bzw. zur Dickenrichtung des Kulissenblechs betrachteten Querschnitt einen Kreisbogen. Ferner weist das zweite Kulissenteil bzw. Kulissenblech 12 radial außen bzw. im Bereich des Kreisbogens 34 eine Vertiefung 36 auf. Im Ausführungsbeispiel unterbricht diese Vertiefung 36 die Kreisbogenform. Diese Vertiefung 36 ist so gestaltet, dass sie im Zusammenwirken mit dem ersten Kulissenteil 10 zwei Dinge ermöglicht. Zum einem wird durch diese Ausbildung in bestimmten Axialstellungen der Schaltwelle bzw. des Kulissenblechs 12 eine Bewegung der Schaltwelle in Schaltrichtung, also eine Schwenk- bzw. Drehbewegung, verhindert; zum anderen wird durch die Ausbildung der Vertiefung 36 im Zusammenwirken mit dem ersten Kulissenteil 10 ein Wählen in bestimmten Schwenkeinstellungen des Kulissenblechs 12 ermöglicht. Wie angesprochen entspricht die Axialbewegung der Schaltwelle der Wählbewegung der Schaltwelle und die Dreh- bzw. Schwenkbewegung der Schaltwelle der Schaltbewegung der Schaltwelle. Da in diesem Ausführungsbeispiel das zweite Kulissenteil bzw. Kulissenblech 12 fest mit der Schaltwelle gekoppelt ist, wird das zweite Kulissenteil bzw. Kulissenblech 12 entsprechend mitbewegt.

Im Ausführungsbeispiel gemäß den Fig. 1 bis 4 ist nun zum Sperren der Schaltbewegung in bestimmten Wählstellungen und zum Ermöglichen des Wählens in bestimmten Schaltstellüngen vorgesehen, dass die Vertiefung 36, einerseits, und die radialen Vorsprünge, wie Vorsprung 28, des ersten Kulissenteils 10, andererseits, jeweils so profiliert sind, dass diese zum Verhindern des Schaltens wesentlich im Formschluss ineinander greifen können, und zwar so formschlüssig, dass ein Verdrehen bzw. Verschwenken in entsprechenden Axialstellungen blockiert wird. Dies ist im Ausführungsbeispiel so, dass die angesprochenen radialen Vorsprünge, wie Vorsprung 28, bzw. Erhöhungen des ersten Kulissenteils 10 eine zylindrische Mantelfläche bilden, und die Vertiefung 36 im wesentlichen Querschnitt kreisbogenförmig ausgebildet ist, wobei der Radius des Kreisbogens der Vertiefung 36 des zweiten Kulissenteils 12 im Wesentlichen dem Radius der Profilierungserhöhung des ersten Kulissenteils 10, wie Profilierungserhöhung 28, entspricht. In vorteilhafter Weise sind sämtliche Profilierungserhöhungen bzw. radialen Vorsprünge des ersten Kulissenteils 10 - zumindest im radial außen - im Wesentlichen gleich geformt, und zwar insbesondere mit gleichem Radius. Durch diese Formabstimmung umgreift das zweite Kulissenteil 12 in entsprechenden Sperrstellungen mit seiner Vertiefung teilweise die entsprechenden Profilierungserhöhungen, wie Profilierungserhöhung 28, des ersten Kulissenteils 10, so dass ein Verschwenken des zweiten Kulissenteils 12 und somit der Schaltwelle verhindert wird. Die Formgestaltung der entsprechenden Erhöhungen, wie Erhöhung 28, des ersten Kulissenteils 10 sowie die Formgestaltung der Vertiefung 36 des zweiten Kulissenteils 12 ist so, dass in der entsprechenden Schwenkstellung des zweiten Kulissenteils 12 dieses zweite Kulissenteil 12 - und somit die Schaltwelle - axial und somit in Wählrichtung beweglich angeordnet ist. Dies ist insbesondere so, dass das zweite Kulissenteil 12 bei einer Axialbewegung axial im wesentlichen in den Bereich einer beliebigen der Vertiefungen bzw. Nuten 14, 16, 18, 20, 22 bewegt werden kann. Da die Nuten bzw. Einstiche mit den jeweiligen Schaltgassen des Getriebeaktors 1 korrespondieren, kann somit die Schaltwelle im Bereich einer beliebigen Schaltgasse bewegt werden, so dass das Wählen ermöglicht wird. Wie angesprochen ist im Bereich der Profilierungserhöhungen bzw. Vorsprünge des ersten Kulissenteils 10, wie beispielsweise Profilierungserhöhung 28, das Verschwenken des zweiten Kulissenteils 12 und somit ein Verschwenken der Schaltwelle blockiert, so dass in den Zwischenstellungen zwischen den Schaltgassen eine Schaltbewegung blockiert ist. Wie angesprochen, sind zwischen den Profilierungserhöhungen bzw. radialen Vorsprüngen des ersten Kulissenteils 10 die Profilierungsvertiefungen bzw. Einstiche bzw. Nuten 14, 16, 18, 20, 22 vorgesehen. Diese Nuten bzw. Vertiefungen 14, 16, 18, 20, 22 sind so gestaltet, dass das zweite Kulissenteil bzw. das Kulissenblech 12 in diese Nuten 14, 16, 18, 20, 22 hineinschwenken kann, wenn das Kulissenblech 12 in einer entsprechenden Axialstellung positioniert ist. Die entsprechenden Axialstellungen sind in keiner der Fig. 1 bis 4 dargestellt.

In Fig. 4 zeigt zwar eine Stellung dargestellt ist, in der das Verschwenken des Kulissenblechs 12 um dessen Schwenkachse, die hier der zentralen Längsachse 32 der Schaltwelle entspricht, blockiert ist; anhand dieser Fig. wird allerdings deutlich, dass das zweite Kulissenteil bzw. Kulissenblech 12 in Axialrichtung in einen Bereich bewegt werden kann, in dem es verschwenkbar ist bzw. in einen Einstich bzw. eine Nut 14 bzw. 16 bzw. 18 bzw. 20 bzw. 22 verschwenkt werden kann. Dabei taucht in diesem Ausführungsbeispiel selbstverständlich nicht das Kulissenblech 12 in seiner Gesamtheit in die entsprechende Vertiefung bzw. Nut bzw. Einstich 14, 16, 18, 20, 22 des ersten Kulissenteils 10 ein, sondern lediglich ein Bereich 38 bzw. 40 des Kulissenblechs 12, und zwar insbesondere ein radial außen gelegener Bereich, der sich an die Vertiefung 36 anschließt. Dies ist hier so, dass ausgehend von einer Neutralstellung des zweiten Kulissenteils 12, in welcher dies axial in seiner Beweglichkeit nicht blockiert ist und in den Axialbereich einer beliebigen der Nuten bewegbar ist, durch Verschenken in einer ersten Orientierung der Bereich 38 in eine entsprechende Nut 14, 16, 18, 20, 22 des ersten Kulissenteils 10 schwenken kann, und durch Verschenken in der dieser ersten Orientierung entgegen gesetzten zweiten Orientierung der Bereich 40 die Nut schwenken kann, wobei selbstverständlich vorausgesetzt ist, dass das Kulissenblech 12 dabei relativ zum ersten Kulissenteil 10 in einer Axialstellung ist, in welcher ein Verschenken des Kulissenblechs 12 ermöglicht wird.

Dadurch, dass das Kulissenblech 12 in eine entsprechende Vertiefung bzw. Einstich bzw. Nut 14, 16, 18, 20, 22 des ersten Kulissenteils 10 eintauchen bzw. einschwenken kann, wird in den jeweils korrespondierenden Stellungen der Schaltwelle Schwenkbarkeit der Schaltwelle ermöglicht, so dass die Schaltwelle eine entsprechende Schaltbewegung ausführen kann.

Die Kulisse innerhalb des Getriebeaktors 1 hat insbesondere die Aufgabe, die Drehung der Schaltwelle nur in ganz bestimmten axialen Positionen der Schaltwelle zu erlauben. Zu diesem Zweck bzw. insbesondere zu diesem Zweck wurde die Achse bzw. Welle 10 geschaffen, die mehrere Einstiche bzw. Nuten 14, 16, 18, 20, 22 hat und in axialer Richtung fest im Gehäuse sitzt. Auf der Schaltwelle wird ein Blech 12 befestigt, das bei Drehung der Schaltwelle in die Einstiche 14, 16, 18, 20, 22 schwenken kann. Das Einschwenken gelingt nur, wenn die Schaltwelle und damit das Blech 12 die richtige Position zur Achse 10 hat.

Sofern das Kulissenblech 12 die entsprechende bzw. richtige Position zur Achse bzw. Kulissenwelle 10 hat bzw. die entsprechende Axialposition hat, kann also bei Drehung der Schaltwelle das Blech in die Einstiche 14, 16, 18, 20, 22 bzw. jeweils einen dieser Einstiche 14, 16, 18, 20, 22 einschwenken. Die beispielhafte konstruktive Ausführung der Kulissenfunktion gemäß den Fig. 1 bis 4 bzw. konstruktive Ausgestaltung der dort gezeigten getriebeaktorinternen Schaltkulisse 2 ist also auf einfache Weise gestaltet und funktioniert betriebssicher.

Anzumerken ist, dass anhand der Fig. 1 bis 4 eine beispielhafte Gestaltung erläutert wurde, bei der die Vertiefung im Querschnitt kreisbogenförmig gestaltet ist und die Profilierungserhöhungen, wie beispielsweise Profilierungserhöhungen 28, einen zylindrischen Mantelflächenabschnitt aufweisen, dessen Durchmesser im wesentlichen an den Durchmesser der Vertiefung 36 angepasst ist. Es versteht sich, dass auch andere zusammenwirkende Formen das entsprechende Verschwenken außerhalb der Schaltgassen verhindern können. So könnte beispielsweise vorgesehen sein, dass die Vertiefung 36 und die entsprechenden radialen Vorsprünge 28 jeweils eckig ausgebildet sind. Ferner könnte vorgesehen sein, dass an Stelle der Vertiefung 36 ein über die Kreisbogenform 34 oder eine anders geformte radial außen gelegene Begrenzung des zweiten Kulissenteils 12 nach außen ragender Vorsprung vorgesehen ist, der zum Sperren der Schwenkbewegung des zweiten Kulissenteils 12 bzw. der Schaltwelle mit jeweils einer in einem Vorsprung bzw. Profilierungserhöhung des ersten Kulissenteils 10 vorgesehenen Vertiefung, wie axialer Durchbruch, zusammenwirken kann.

Der Getriebeaktor 1 kann beispielsweise der Getriebeaktor eines Parallelschaltgetriebes (PSG) oder Doppelkupplungsgetriebes (DKG) oder Automatisierten Schaltgetriebes (ASG) sein, bzw. für eines dieser beispielhaft genannten Systeme ausgebildet sein.

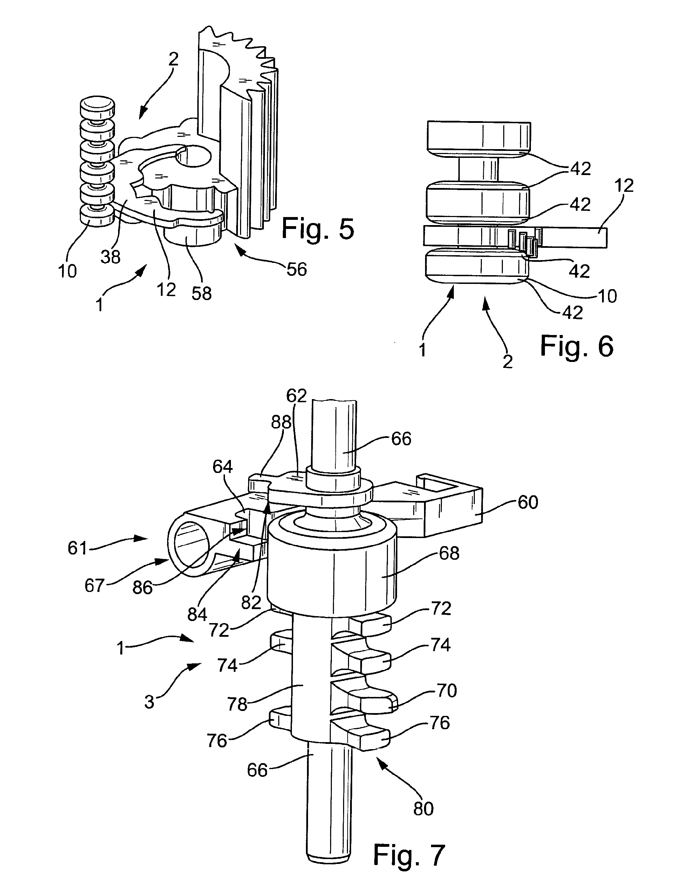

Die Fig. 5 und 6 zeigen eine zweite beispielhafte Ausführungsform der Erfindung, die insbesondere eine Modifikation der anhand der Fig. 1 bis 4 erläuterten Gestaltung ist in teilweiser Ansicht.

Dargestellt ist in den Fig. 5 und 6 insbesondere Getriebeaktor 1 in teilweiser Ansicht, der eine interne Kulisse 2 besitzt. Es kann dabei ist insbesondere vorgesehen sein, dass über die interne Kulisse 2 die Position der Schaltwelle in Wählrichtung bestimmt wird, bzw. umgekehrt.

Die Kulisse 2 wird im Wesentlichen durch zwei Bauteile gebildet, nämlich das erste Kulissenteil 10 sowie das zweite Kulissenteil 12. Das erste Kulissenteil 10 kann insbesondere im Wesentlichen so gestaltet und angeordnet bzw. gelagert sein, wie dies anhand der Fig. 1 bis 4 erläutert wurde.

Das zweite Kulissenteil 12 ist hier als Blech bzw. Kulissenblech bzw. Zwischenblech gestaltet und unterscheidet sich hinsichtlich seiner Form von dem Kulissenblech gemäß den Fig. 1 bis 4. Das Zwischenblech 12 ist in der Gestaltung gemäß Fig. 5 und 6 im Wesentlichen sichelförmig ausgebildet, wie gut Fig. 5 verdeutlicht.

Das Zwischenblech 12 ist auf einem Zahnrad 56 befestigt, das wiederum auf einer Schaltwelle 58 sitzt. Das Zwischenblech 12 besitzt somit eine direkte Korrelation zur Schaltwelle 58. Das erste Kulissenteil 10, das eine (Kulissen)Achse bzw. (Kulissen)Welle ist, ist innerhalb eines nicht dargestellten Aktorgehäuses fixiert.

Das Zwischenblech 12 weist einen radial außen gelegenen Abschnitt 34 auf, der im senkrecht zur Dickenrichtung des Zwischenbleches 12 betrachteten Querschnitt eine kreisbogenförmig ausgebildet ist. Dieser im Querschnitt kreisbogenförmige Abschnitt 34 ist durch eine Vertiefung 36 im radial außen gelegenen Abschnitt des Zwischenblechs 12 unterbrochen, die sich hinsichtlich ihrer Form allerdings von der Vertiefung 36 des Blechs 12 unterscheidet, das anhand der Fig. 1 bis 4 erläutert wurde. Diese Vertiefung 36 ist in der Gestaltung gemäß den Fig. 5 und 6 - abweichend von der Gestaltung gemäß den Fig. 1 bis 4 - nicht als an die radialen Vorsprünge bzw. Profilierungserhöhungen des ersten Kulissenteils 10 formangepasster Abschnitte mit entsprechender Negativkontur bzw. als im Querschnitt kreisbogenförmig gestaltete Vertiefung ausgebildet, sondern vielmehr als eine Vertiefung, die annähernd eckig gestaltet ist.

Die Gestaltung dieser Vertiefung 36 ist allerdings wiederum so, dass das Zwischenblech 12 in seiner Schwenkrichtung eine Stellung aufweist, in welcher es axial frei, also ohne dabei blockiert zu werden, zu einer beliebigen der Nuten 14, 16, 18, 20, 22 des ersten Kulissenteils 10 bewegt werden kann, in welche es jeweils mit zumindest einem Bereich 38, 40 dann geschwenkt werden kann.

Wie angesprochen besitzt auch bei der Gestaltung gemäß den Fig. 5 und 6 die Achse bzw. Welle bzw. das erste Kulissenteil 10 mehrere Nuten entsprechend den Schaltgassen (Wählpositionen) des Getriebeaktors.

Das Zwischenblech 12 weist also eine Freistellung auf, wodurch die Wählbewegung in der Stellung ermöglicht wird, in der das Zwischenblech in Schaltrichtung in einer Neutralposition ist. Wenn der Getriebeaktor 1 außerhalb einer Schaltgasse steht, also insbesondere axial außerhalb einer Schaltgasse, entsteht ein Formschluss zwischen dem Außendurchmesser der Achse bzw. Welle bzw. des ersten Kulissenteils 10 und der Freistellung des Zwischenblechs 12, so dass das Schalten gesperrt ist. Sofern das Zwischenblech axial in Bereichen angeordnet ist, aus welchen es in die bzw. jeweils eine der Nuten bzw. Vertiefungen 14, 16, 18, 20, 22 des ersten Kulissenteils 10 geschwenkt werden kann, schwenkt das Zwischenblech 12 durch eine Schaltbewegung in die Nuten bzw. die entsprechende Nut der Achse bzw. Welle bzw. des ersten Kulissenteils 10 ein. Hierdurch entsteht ein Formschluss in Wählrichtung, so dass das Wählen gesperrt ist. In entsprechender Weise ist auch bei der Gestaltung gemäß den Fig. 1 bis 4 das Zwischenblech 12 dann in einer (jeweiligen) Stellung, in der das Wählen gesperrt ist, und das Zwischenblech - und somit auch die Schaltwelle - axial nicht oder nur sehr eingeschränkt bewegt werden kann, wenn dieses Zwischenblech 12 in einer Schwenkstellung ist, in der es sich in eine der Nuten 14, 16, 18, 20 bzw. 22 erstreckt bzw. dort eingreift.

Im folgenden sollen nun einige weitere Gestaltungen bzw. Merkmale genau erläutert werden, die bei der Ausgestaltung gemäß den Fig. 1 bis 4 und/oder bei der Ausgestaltung gemäß Fig. 5 und 6 oder bei einer anderen erfindungsgemäßen Weiterbildung gegeben sein können.

Der Getriebeaktor 1 kann einen ersten Elektromotor aufweisen, welcher die Wählbewegung erzeugt sowie einen davon verschiedenen zweiten Elektromotor, welcher die Schaltbewegung erzeugt. Alternativ hierzu kann allerdings auch vorgesehen sein, dass der Getriebeaktor 1 genau einen Elektromotor aufweist, welcher sowohl die Bewegungen für das Schalten als auch die Bewegungen für das Wählen erzeugt.

Dies kann beispielsweise so sein, dass die Drehbewegung der Ausgangswelle dieses Elektromotors in einer Orientierung der Bewegung für das Schalten entspricht und die Drehbewegung dieser Ausgangswelle des Elektromotors in der entgegen gesetzten Orientierung einer Bewegung für das Wählen entspricht. Dabei kann vorgesehen sein, dass ein entsprechender Mechanismus vorgesehen ist, der die Drehbewegungen in der einen dieser beiden Orientierungen, nämlich die Drehbewegung für das Wählen, in eine Axialbewegung der Schaltwelle wandelt, und der die Drehbewegung in der entgegen gesetzten Orientierung in eine Drehbewegung der Schaltwelle für das Schalten wandelt.

Es kann allerdings insbesondere vorgesehen sein, dass der Getriebeaktor ein 1-Motor-Getriebeaktor ist. Weiterhin kann vorgesehen sein, dass der Getriebeaktor mit einem Aktiv-Interlock-Mechanismus versehen ist.

Sowohl bei einer Gestaltung, bei der der Getriebeaktor 1 lediglich einen Elektromotor aufweist, der die Antriebsbewegung für das Wählen und für das Schalten bereit stellt, als auch bei Gestaltungen, bei denen für die Erzeugung der Wählbewegungen, einerseits, und der Schaltbewegungen, andererseits, separate Elektromotoren vorgesehen sind, kann vorgesehen sein, dass der bzw. die Elektromotoren mit einem elektronischen Steuergerät in Signalverbindung stehen. In diesem elektronischen Steuergerät kann Steuerungsprogramm, insbesondere Software, abgelegt sein, welche die Gangwechsel bzw. die Aktorbetätigung steuert. Dies kann insbesondere so sein, dass das Steuerungsprogramm bzw. die Software durch entsprechendes Bestromen den bzw. die Elektromotoren aktiviert. bzw. deaktiviert.

Es kann bei bestimmten Ausführungsformen aus Gründen des Zusammenspiels zwischen dem Getriebeaktor 1 und dem Steuerungsprogramm bzw. Software notwendig sein, die Kulisse mit einem Grundspiel auszustatten, so dass sowohl in der geschalteten Stellung als auch in einer Wählgassenzwischenstellung ein Verfahren des Getriebeaktors möglich ist. Bedingt durch Regelungenauigkeiten und das kinematische Spiel des Getriebeaktors können die Schaltgassen ggf. nicht genau angefahren werden. Um eine Verzwängung der Wählkinematik bzw. Wählmechanik mit der Kulisse zu vermeiden, kann es hierbei sinnvoll sein oder bei gewissen Gestaltungen sogar erforderlich sein, dass das Kulissenspiel sehr groß ist. Auf der anderen Seite kann das Zusammenspiel mit der inneren Schaltmechanik des Getriebes eine sehr präzise Positionierung der Schaltwelle erfordern. Zur Erfüllung dieser beiden kontroversen Anforderungen an die Kulisse 2 - und / oder aus anderen Gründen - kann vorgesehen sein, dass die Kulisse 2 große Einführfasen aufweist bzw. mit großen Einführfasen versehen wird. Hierdurch können beispielsweise Fehlstellungen durch ein breites Kulissenmaul abgefangen werden und die Stellung über ein Abgleiten auf den Flanken korrigiert werden. Durch die spezielle Gestaltung der Nuten 14, 16, 18, 20, 22 innerhalb der Achse bzw. Welle bzw. des ersten Kulissenteils 10 kann dieses beispielsweise erreicht werden. Die Gestaltung der Nuten 14, 16, 18, 20, 22 (insbesondere Winkel, Neutralspiel) kann individuell auf die vorliegenden Verhältnisse von Inkrementalauflösungen und kinematischem Spiel abgestimmt werden. Insbesondere im Hinblick auf die Inkrementalauflösung sei erwähnt, dass der Getriebeaktor gemäß den Fig. 1 und 4 ebenso wie ein Getriebeaktor gemäß den Fig. 5 und 6 bzw. ein unter die Erfindung fallender Getriebeaktor in bevorzugter Gestaltung zumindest eine Inkrementalwegmesseinrichtung aufweist, mittels welcher die Bewegungen bzw. Stellungen bzw. Stellungsänderungen des Aktors ermittelt bzw. erfasst werden können. Dies kann beispielsweise so sein, dass an dem bzw. an den Elektromotoren bzw. deren jeweilige Ausgangswelle jeweils ein Inkrementalwegsensor vorgesehen ist.

Durch die hierbei beispielhaft vorgesehene sich verjüngende Kulissenform kann auch die Verfahrrichtung der Schaltbewegung erfasst werden.

In den Ausführungsbeispielen gemäß Fig. 1 bis 4 bzw. gemäß Fig. 5 und 6 sind derartige Einführfasen mit dem Bezugszeichen 42 versehen. Aus Übersichtsgründen ist nicht jeder der Einführfasen mit dem Bezugszeichen 42 versehen. Insbesondere Fig. 4 verdeutlicht allerdings, dass bei den Nuten jeweils axial beidseits an den Nutbegrenzungen eine Einführfase vorgesehen ist.

Die Fig. 7 bis 10 zeigen eine beispielhafte erfindungsgemäße Getriebeeinrichtung 3 mit einem beispielhaften erfindungsgemäßen Getriebeaktor 1 in teilweiser schematischer Ansicht.

Dargestellt ist dort insbesondere eine spezifische Rückwärtsgangausführung bzw. eine Schaltschiene 60, mittels welcher der Rückwärtsgang betätigt werden kann, und - in teilweiser Ansicht - ein Getriebeaktor 1, mittels welchem unter anderem die Schaltschiene 60 des Rückwärtsganges für das Ein- und Auslegen des Rückwärtsganges betätigbar ist.

Die Schaltschiene 60 für den Rückwärtsgang, die insbesondere Bestandteil einer (teilweise dargestellten) inneren Getriebeschaltung 61 ist, zu der auch Schaltschienen für die Vorwärtsgänge gehören, weist ein Schaltmaul 64 auf, das einen Eingriffsbereich für ein Betätigungselement 62 bildet. Dieses Betätigungselement 62 ist als (zweiter) Schaltfinger ausgebildet und Bestandteil des Getriebeaktors 1. Der Getriebeaktor 1 weist ferner eine Schaltwelle 66 auf. Diese Schaltwelle 66 ist für das Wählen axialbeweglich und für das Schalten drehbeweglich. Es kann eine Kulisse 2 vorgesehen sein, die beispielsweise derart sein kann, wie es anhand der Fig. 1 bis 4 bzw. der Fig. 5 und 6 erläutert wurde, und die mit der Schaltwelle 66 entsprechend zusammenwirkt. Die innere Getriebeschaltung 61 weist mehrere Mechanismen bzw. Endausgangsmechanismen auf. Jeder dieser Endausgangsmechanismen weist eine Schaltschiene auf, sowie - eine Schiebemuffe oder ein funktionsgleiches oder funktionsähnliches Bauteil zum wahlweisen Erzeugen und Lösen einer drehfesten Verbindung eines Zahnradrades eines Radsatzes mit einer dieses Zahnrad tragenden Welle. In den Fig. 7 bis 10 sind die Endausgangsmechanismen der Vorwärtsgänge nicht gezeigt und der Endausgangsmechnismus 67 des Rückwärtsganges nur teilweise in Form der Schaltschiene 60.

Das bereits angesprochene Betätigungselement 62, das für das Einlegen und für das Auslegen des Rückwärtsganges vorgesehen ist, und hierzu auf die Schaltschiene 60 des Rückwärtsganges entsprechend einwirken kann, sitzt auf der Schaltwelle 66. Dieses hier als (zweiter) Schaltfinger ausgebildete Betätigungselement 62, das der Getriebeaktor besitzt, dient dabei hier zum Verschieben der Schaltschiene 60 des Rückwärtsganges.

Auf der Schaltwelle 66 des Getriebeaktors 1 sitzt ferner ein erstes Sperrteil 68 für den Rückwärtsgang. Dieses (erste) Sperrteil 68 ist in diesem Beispiel ein Sperrzylinder, und wird daher vereinfachend im folgenden als erster Sperrzylinder 68 bezeichnet, wobei anzumerken ist, dass anstelle eines ersten Sperrzylinders 68 auch ein anders geformtes erstes Sperrteil 68 vorgesehen sein kann. Der erste Sperrzylinder 68 kann separat von der Schaltwelle 66 gefertigt sein und dann auf dieser angeordnet sein, oder einstückig mit der Schaltwelle 66 gefertigt sein. Der erste Sperrzylinder 68 ist gegenüber der Schaltwelle 66 axialfest, und gegebenenfalls auf drehfest.

Auf der Schaltwelle 66 sitzen ferner ein Hauptbetätigungselement 70 sowie mehrere Nebenbetätigungselemente 72, 74, 76. Mittels des Hauptbetätigungselements 70 können die Vorwärtsgänge eingelegt werden. Hierzu kann das Hauptbetätigungselement 70 betätigend in jeweils eine entsprechende Schaltschiene eines Vorwärtsganges eingreifen. Zu diesem Zweck weisen die Schaltschienen der Vorwärtsgänge Schaltmäuler auf. Mittels der Nebenbetätigungselemente 72, 74, 76 können die Vorwärtsgänge ausgelegt und / oder gesperrt werden. Hierzu greifen können die Nebenbetätigungselemente 72, 74, 76 betätigend bzw. sperrend in die Schaltschienen der Vorwärtsgänge ein. Für diesen Eingriff können separate Schaltmäuler vorgesehen sein, also Schaltmäuler, die von denen verschieden sind, die für den Eingriff des Hauptbetätigungselements 70 vorgesehen sind; es kann auch vorgesehen sein, dass die Schaltmäuler der Schaltschienen der Vorwärtsgänge, in welche das Hauptbetätigungselement 70 betätigend eingreifen kann, auch für den Eingriff der Nebenbetätigungselemente 72, 74, 76 bestimmt sind, so dass an den jeweiligen Schaltschienen jeweils nur ein Schaltmaul vorgesehen ist. Das Zusammenwirken des Hauptbetätigungselements 70 mit den Nebenbetätigungselementen 72, 74, 76 und den Schaltschienen der Vorwärtsgänge ist dabei insbesondere so, dass sichergestellt wird, dass jeweils nur ein Vorwärtsgang des Getriebes bzw. des gleichen Teilgetriebes gleichzeitig eingelegt sein kann.

Dies ist insbesondere so, dass mittels der Nebenbetätigungselemente 72, 74, 76 sichergestellt wird, dass alle den von der Schaltgasse des Zielgangs verschiedenen Schaltgassen zugeordnete (Vorwärts)Gänge des Getriebes bzw. des Teilgetriebes, in dem der jeweilige Zielgang angeordnet ist, mittels der Nebenbetätigungselemente 72, 74, 76 ausgelegt werden - sofern sie es nicht bereits sind - bevor der Zielgang mittels des Hauptbetätigungselements 70 eingelegt wird.

Das Hauptbetätigungselement 70 kann beispielsweise, wie es die Fig. 7 bis 9 zeigen, ein (erster) Schaltfinger sein. Die Nebenbetätigungselemente 72, 74, 76 können beispielsweise, wie es ebenfalls in den Fig. 7 bis 9 gezeigt ist, flügelartig gestaltet sein. Der (erste) Schaltfinger 70 sowie die Nebenbetätigungselemente 72, 74, 76 erstrecken sich im Wesentlichen radial bezüglich der Schaltwelle 66. In diesem Beispiel - und dies kann auch anders sein - sind das Hauptbetätigungselement 70 sowie die Nebenbetätigungselemente 72, 74, 76 fest an bzw. auf einer Hülse 78 angeordnet, die eine Aufnahme- bzw. Durchgangsbohrung aufweist, durch welche sich die Schaltwelle 66 erstreckt. Die Hülse 78 ist axial- und drehfest auf der Schaltwelle 66 gelagert. Die Einheit aus der Hülse 78 sowie dem Hauptbetätigungselement 70 und den Nebenbetätigungselementen 72, 74, 76 wird auch als Schalthebel 80 bezeichnet.

Der Rückwärtsgang ist bei dieser Gestaltung nicht im Active-Interlock-Verbund der Vorwärtsgänge des Getriebes bzw. des Getriebeaktors 1 integriert und ist nicht synchronisiert. Es kann aber auch vorgesehen sein, dass auch der Rückwärtsgang synchronisiert ist. Zumindest die Vorwärtsgänge sind in vorteilhafter Weiterbildung synchronisiert ausgebildet. Der Active-Interlock-Verbund der Vorwärtsgänge ist dabei insbesondere so, dass durch die Gestaltung des zum Betätigen der Vorwärtsgänge vorgesehenen Bereichs des Getriebeaktors 1 bzw. durch das Zusammenwirken entsprechender Bereiche des Getriebeaktors 1 mit den den Vorwärtsgängen zugeordneten Schaltschienen sichergestellt wird, das jeweils nur ein Vorwärtsgang des Getriebes bzw. des gleichen Teilgetriebes gleichzeitig eingelegt werden kann. Dabei ist insbesondere vorgesehen, dass mittels Nebenbetätigungselementen 72, 74, 76 bzw. Auslegegeometrien und/oder Nebenfunktionsflächen, wie beispielsweise Radien und Auswerferkante, auf die Schaltschienen der Vorwärtsgänge, die aktuell nicht eingelegt werden sollen, so eingewirkt wird, dass diese ausgelegt sind, bevor der Vorwärtsgang, welcher einen aktuellen Zielgang bildet, eingelegt ist. Dabei ist insbesondere vorgesehen, dass das Hauptbetätigungselement 70, welches für die Betätigung der Schaltschienen der Vorwärtsgänge vorgesehen ist, nach dem Einlegen eines Vorwärtsgangs wieder in seine Neutralstellung zurückbewegt werden kann - wobei in dieser Neutralstellung insbesondere vorgesehen ist, dass Wählbewegungen ausgeführt werden können -, ohne dass dabei der zuvor eingelegte Vorwärtsgang des gleichen Getriebes bzw. Teilgetriebes wieder ausgelegt wird.

Beispielsweise kann vorgesehen sein, dass zum Einlegen des Rückwärtsganges das Schieberad bzw. die Schiebemuffe um cirka 24 mm verschoben wird. Dazu muss sich die Schaltwelle um 52 Grad drehen. Anzumerken ist hierzu allerdings, dass diese Werte rein beispielhafter Natur sind und an einer speziellen bereits konstruktiv umgesetzten Gestaltung orientiert sind, so dass auch deutlich abweichende Werte je nach konstruktiver Ausgestaltung vorgesehen sein können. Zusätzlich zu den Hauptfunktionsflächen und Nebenfunktionsflächen bzw. Auslegegeometrien, Einlegegeometrien, Radien und Auswerferkante bzw. Haupt- 70 und Nebenbetätigungselementen 72, 74, 76 für das Ein- und Auslegen der Vorwärtsgänge, ist bei der Gestaltung gemäß den Fig. 7 bis 10 vorgesehen, dass ein Betätigungselement, hier (zweiter) Schaltfinger 62, für das Ein- und Auslegen eines Rückwärtsganges vorgesehen ist. Der (zweite) Schaltfinger 62 ist also insbesondere zum Verschieben der Schaltschiene 60 des Rückwärtsganges vorgesehen.

Sowohl für das Einlegen als auch für das Auslegen des Rückwärtsganges kann der (zweite) Schaltfinger 62 betätigend in das Schaltmaul 64 der Schaltschiene 60 des Rückwärtsganges eingreifen. Die entsprechende Betätigung kann dadurch ausgeführt werden, dass die Schaltwelle 66 zum Einlegen des Rückwärtsganges in der einen Drehrichtung gedreht wird, und zum Auslegen des Rückwärtsganges in der entsprechend entgegen gesetzten Drehrichtung bewegt wird. Es ist also insbesondere vorgesehen, dass durch ein entsprechendes Verdrehen der Schaltwelle 66 bei einer entsprechenden Axialposition des (zweiten) Schaltfingers 62 der Rückwärtsgang eingelegt werden kann, wobei dabei der (zweite) Schaltfinger 62 die Schaltschiene 60 des Rückwärtsganges entsprechend verschiebt bzw. axial bewegt, und wobei beim Zurückdrehen der Schaltwelle 66 und somit des (zweiten) Schaltfingers 62 der Rückwärtsgang direkt wieder ausgelegt wird. Insofern unterscheidet sich die spezifische Rückwärtsgangausführung von einer Gestaltung eines Active-Interlock-Verbunds, bei dem das Zurückbewegen des (ersten) Schaltfingers bzw. Hauptbetätigungselements 70 ermöglicht wird, ohne dass der zuvor eingelegte Gang dabei wieder ausgelegt wird. In vorteilhafter Ausgestaltung ist allerdings vorgesehen, dass der (zweite) Schaltfinger 62, der für das Ein- und Auslegen des Rückwärtsganges vorgesehen ist, derart mit einem Active-Interlock-Verbund der Vorwärtsgänge zusammenwirkt, dass während des mittels des (zweiten) Schaltfingers 62 bewirkten Einlegens des Rückwärtsganges die Vorwärtsgänge bzw. der Vorwärtsgang in dem gleichen Getriebe oder Teilgetriebe geschaltet ist, mittels der Nebenbetätigungselemente 72, 74, 76 des Active-Interlock-Verbunds bzw. über Auswerfer eines Schalthebels 80 ausgelegt werden. Dies kann beispielsweise so sein, dass während bzw. vor einem entsprechenden Einlegen des Rückwärtsganges die Gänge 1, 3 und 5 ausgelegt werden, und zwar insbesondere über die Nebenbetätigungselemente bzw. Auswerfer des Schalthebels. Letztendlich hängt dies aber von der konkreten Getriebegestaltung und Gängeverteilung ab, so dass anstelle der Gänge 1, 3 und 5 auch andere Gänge bzw. eine abweichende Gängekombination betroffen sein können.

Gemäß der Gestaltung gemäß den Fig. 7 bis 10 ist ferner - wie bereits erwähnt - ein erster Sperrzylinder 68 vorgesehen. Dieser erste Sperrzylinder 68 ist an bzw. auf der Schaltwelle 66 vorgesehen. Dieser erste Sperrzylinder 68 ist insbesondere zu dem Zweck vorgesehen, um ungewolltes Verrutschen des Schieberades bzw. der Schiebemuffe des Rückwärtsganges zu verhindern, bzw. eine ungewollte Bewegung der Schaltschiene 60 für den Rückwärtsgang zu verhindern. Der erste Sperrzylinder 68 kann Bestandteil der Schaltwelle 66 sein bzw. einstückig mit dieser ausgebildet sein, oder als separat gefertigtes Bauteil an bzw. auf der Schaltwelle 66 angeordnet sein. Der erste Sperrzylinder 68 bzw. die Schaltschiene 60 für den Rückwärtsgang ist so ausgebildet, dass der erste Sperrzylinder 68 und die Schaltschiene 60 für den Rückwärtsgang im Zusammenwirken ein Verschieben der Schaltschiene 60 des Rückwärtsganges bzw. eine Bewegung des Rückwärtsgangesrades bzw. der dem Rückwärtsgang zugeordneten Schiebemuffe verhindern können. Zum Verhindern dieser Bewegung bzw. eines ungewollten Verrutschens des Schieberades greift der erste Sperrzylinder 68 in die Schaltschiene 60 des Rückwärtsganges ein, bzw. kann dieser erste Sperrzylinder 68 in die angesprochene Schaltschiene 60 eingreifen. Dies ist insbesondere so, dass die Schaltschiene 60 des Rückwärtsganges in bestimmten Stellungen bzw. dann, wenn das Rückwärtsgangrad bzw. die Schiebemuffe des Rückwärtsgangrads bzw. die Schaltschiene 60 des Rückwärtsganges nicht bewegt werden soll - also insbesondere wenn Vorwärtsgänge eingelegt werden - durch den ersten Sperrzylinder 68 gehalten wird. Dies Halten kann beispielsweise durch eine formschlüssige Verbindung zwischen der Schaltschiene 60 des Rückwärtsganges und dem ersten Sperrzylinder 68 bewirkt werden. Wie das Ausführungsbeispiel gemäß den Fig. 7 bis 10 erkennen lässt, ist der erste Sperrzylinder 68 axial beabstandet zum (zweiten) Schaltfinger 62, der für das Ein- und Auslegen des Rückwärtsganges vorgesehen ist, angeordnet. Dieser Abstand ist bevorzugt ein geringer Abstand. Es ist insbesondere vorgesehen, dass der erste Sperrzylinder 68 in Axialstellungen der Schaltwelle 66, in denen ein Vorwärtsgang durch entsprechendes Verdrehen der Schaltwelle 66 eingelegt werden kann, die Schaltschiene 60 des Rückwärtsganges entsprechend sperrt. Dabei ist insbesondere vorgesehen, dass erst beim bzw. kurz vor dem zum Erreichen der Rückwärtsganggasse, also insbesondere wenn bzw. kurz bevor der (zweite) Schaltfinger 62 axial im Bereich des Schaltmauls 64 der Schaltschiene 60 des Rückwärtsganges positioniert ist, der erste Sperrzylinder 68 die Schaltschiene 60 des Rückwärtsganges freigibt, so dass deren Bewegung nicht mehr blockiert.

Auch bei der Gestaltung gemäß den Fig. 7 bis 10 weist - wie zuvor auch in Bezug auf die Gestaltung gemäß den Fig. 1 bis 4 bzw. 5 und 6 erwähnt - der Getriebeaktor 1 zumindest einen Elektromotor auf, welcher die Bewegungen für das Wählen und das Schalten bewirkt. Dies kann so sein, dass für die Antriebsbewirkungen für das Wählen und für das Schalten separate Elektromotoren vorgesehen sind; alternativ hierzu kann vorgesehen sein, dass sowohl für die Antriebsbewegungen für das Wählen als auch für die Antriebsbewegungen für das Schalten jeweils der gleiche bzw. genau ein Elektromotor vorgesehen ist. Die Antriebsbewegungen für das Wählen bzw. die Antriebsbewegung für das Schalten können mittels entsprechender Übertragungsmechanismen auf die Schaltwelle 66 übertragen werden, so dass die Schaltwelle 66 für das Wählen axial bewegt wird und für das Schalten verdreht bzw. verschwenkt wird.

Der bzw. die Elektromotoren können dabei - wie auch oben erwähnt - von einem elektronischen Steuergerät angesteuert werden und zu diesem Zweck mit diesem im Signalverbindung stehen. Im elektronischen Steuergerät kann dabei eine Software abgelegt sein, die die entsprechenden Betätigungen bzw. die entsprechende Bestromung des oder der Elektromotoren steuert. Ferner kann auch bei der Gestaltung gemäß den Fig. 7 bis 10 vorgesehen sein, dass ein aktorinternes Wegmeßsystem, insbesondere mit wenigstens einem Inkremental-Wegaufnehmer, vorgesehen ist. Solche Inkremental-Wegaufnehmer können beispielsweise an der Ausgangswelle des Elektromotors bzw. an den jeweiligen Ausgangswellen der Elektromotoren positioniert sein und entsprechende Bewegungen der Ausgangswellen dieser Elektromotoren erfassen.

Insbesondere bei einer solchen Gestaltung ist für das Zusammenspiel der Software mit dem Getriebeaktor in der Regel ein fester Referenzpunkt notwendig. Dies gilt insbesondere dann, wenn das Wegmeßsystem als Inkremental-Wegaufnehmer ausgebildet ist, bzw. von Inkremental-Wegaufnehmern gebildet wird. Der Abgleich des aktuellen Wegmeßsystem kann dabei durch Anfahren eines festen Punkts im Getriebe bzw. des Getriebeaktors erfolgen. Ein solcher Punkt wird auch als Referenzpunkt bezeichnet.

Ein solcher Referenzpunkt liegt häufig auf einer Seite bzw. an einer der beiden Enden der Neutralgasse und erweitert diese um cirka eine halbe Gassenbreite. Dies ist im Ausführungsbeispiel gemäß den Fig. 7 bis 10 so, dass der Referenzpunkt unterhalb des Rückwärtsganges liegt bzw. dann angefahren ist, wenn der Getriebeaktor 1 bzw. dessen Schaltwelle 66 in ihrer am weitesten nach unten gefahrenen Stellung ist. Dabei kann vorgesehen sein, dass - wie bereits zuvor erwähnt - die Neutralgasse an der besagten Stelle um cirka eine halbe Gassenbreite erweitert ist.

Insbesondere dann, wenn der Referenzpunkt unterhalb des Rückwärtsganges liegt, wird das Schieberad bzw. die Schiebemuffe bzw. die Schaltschiene 60, die dem Rückwärtsgang zugeordnet ist, während einer Referenzfahrt bewegt. Dies ist grundsätzlich dann kein Problem, wenn ausreichend sichergestellt wird, dass der Rückwärtsgang bei einer solchen Referenzfahrt nicht eingelegt wird. Beispielsweise allerdings bei einem Fehler in der Kulisse kann diese Bewegung des Schieberades bzw. der Schiebemuffe bzw. der Schaltschiene 60 - zumindest unter ungünstigen Bedingungen - dazu führen, dass der Rückwärtsgang ungewollt eingelegt wird.

Um dies zu verhindern, bzw. die Wahrscheinlichkeit eines solchen gewollten Einlegens des Rückwärtsganges während einer Referenzfahrt zu vermindern, ist vorgesehen, dass der (zweite) Schaltfinger 62, der für das Ein- und Auslegen des Rückwärtsganges zuständig ist, neben einer Einlegegeometrie bzw. ―geometrien, die das Einlegen oder Auslegen des Rückwärtsganges bewirken, zusätzlich ein zweites Sperrteil 82 aufweist, dass beispielsweise ein zweiter Sperrzylinder ist. Mittels dieses zweiten Sperrteils 82 kann - insbesondere im Zusammenwirken mit der Schaltschiene 60 für den Rückwärtsgang - der Rückwärtsgang gesperrt werden, und zwar insbesondere bei einer Referenzfahrt, bzw. wenn die entsprechenden Axialstellung des (zweiten) Schaltfingers 62, bei der die Referenzfahrt durchgeführt wird, gegeben ist. Auf diese Weise wird ein getriebefester Anschlag gebildet.

Es ist also insbesondere vorgesehen, dass der getriebefeste Punkt bzw. Referenzpunkt durch den (zweiten) Schaltfinger 62 an sich, der für das Ein- und Auslegen des Rückwärtsganges vorgesehen ist, und die Schaltschiene 60, die für das Ein- und Auslegen des Rückwärtsganges vorgesehen ist, erzeugt wird, indem der (zweite) Schaltfinger 62 eine Sperrzylinderfläche enthält, die insbesondere entsprechend mit der Schaltschiene 60 zusammenwirkt. Dies ist insbesondere so, dass sich beim Anfahren des Referenzpunktes die Schaltschiene 60 des Rückwärtsganges und der (zweite) Schaltfinger 62 in sich blockieren. Der Referenzpunkt liegt dabei insbesondere - wie angesprochen - in Wählrichtung unterhalb der eigentlichen Rückwärtsganggasse, bzw. überlappend zu dieser.

Es ist insbesondere vorgesehen, dass die Schaltschiene 60 für den Rückwärtsgang so ausgebildet ist, dass in der Aktorstellung, in der der Referenzpunkt angefahren ist, die Schaltschiene 60 für den Rückwärtsgang mit dem zweiten Sperrteil 82 so zusammenwirkt, dass ein Verschieben dieser Schaltschiene 60 beim Anfahren des Referenzpunkts bzw. bei einem hierdurch bewirkten Belasten der Schaltschiene 60 blockiert wird, während sie andererseits so mit dem zweiten Sperrteil 82 zusammenwirkt, dass dann, wenn der Aktor im Bereich der Schaltgasse für den Rückwärtsgang positioniert ist, der Rückwärtsgang ein- und wieder ausgelegt werden kann.

Wie gut anhand der Fig. 7 bis 10 zu erkennen ist, weist die Schaltschiene 60 des Rückwärtsganges - insbesondere zu diesem Zweck - unterschiedliche Profilierungen 84, 86 auf. Diese Profilierungen 84, 86 sind - in axialer Richtung der Schaltwelle 66 gesehen - benachbart an der Schaltschiene 60 des Rückwärtsganges angeordnet. Die Schaltschiene 60 des Rückwärtsganges erstreckt sich mit ihrer Längserstreckungsrichtung - wie auch die nicht gezeigten Schaltschienen der Vorwärtsgänge - quer, und insbesondere senkrecht, zur Längsachse der Schaltwelle 66.

Eine erste 84 dieser Profilierungen 84, 86 ist so ausgebildet, dass der zweite Sperrzylinder bzw. das zweite Sperrteil 82 mit dieser ersten Profilierung 84 zum Sperren des Rückwärtsganges bzw. zum Blockieren einer Axialverschieblichkeit der Schaltschiene 60 für einen Rückwärtsgang zusammenwirken kann. Diese erste Profilierung 84 ist in Fig. 7 bis 10 als (profilierter) Vorsprung ausgebildet. In einer in den Fig. 7 bis 9 darüber liegenden Ebene ist eine zweite Profilierung 86 der Schaltschiene 60 für den Rückwärtsgang vorgesehen, die so ist, dass der (zweite) Schaltfinger 62 verschwenkt werden kann, ohne dass sein zweites Sperrteil 82 an der Schaltschiene 60 des Rückwärtsganges anschlägt.

Das Schaltmaul 64 der Schaltschiene 60 für den Rückwärtsgang ist so ausgebildet, dass es sich - in axialer Richtung der Schaltwelle 66 gesehen - in den Bereich erstreckt, in dem die erste 84 Profilierung vorgesehen ist und in den Bereich, in dem die zweite Profilierung 86 vorgesehen ist.

In der Ebene bzw. in dem in Achsrichtung der Schaltwelle 66 gelegenen Bereich der Schaltschiene 60, in dem die zweiten Profilierung 86 vorgesehen ist, kann der (zweite) Schaltfinger 62 über seinen entsprechenden, für das Ein- und Auslegen des Rückwärtsganges vorgesehenen Bereich 88 die Schaltschiene 60 zum Ein- und Auslegen des Rückwärtsganges entsprechend durch Drehung der Schaltwelle 66 verschieben, wobei das zweite Sperrteil 82 des (zweiten) Schaltfingers 62 bzw. das Zusammenwirken dieses zweiten Sperrteils 82 mit der zweiten Profilierung 86 der Schaltschiene 60 ein entsprechendes Verschwenken nicht blockiert.

In der Ebene bzw. in dem in Achsrichtung der Schaltwelle 66 gelegenen Bereich der Schaltschiene 60, in dem die erste Profilierung 84 der Schaltschiene 60 für den Rückwärtsgang vorgesehen ist, kann die Schaltschiene 60 des Rückwärtsganges durch den Bereich 88 des (zweiten) Schaltfingers 62 so belastet werden, dass sie grundsätzlich verschoben werden würde, wobei einer entsprechenden Bewegung der Schaltschiene 60 allerdings dadurch entgegenwirkt wird, dass das zweite Sperrteil 82 mit der ersten Profilierung 84 in Bezug auf die angesprochene Bewegung blockierend entgegenwirkt.

In Zusammenschau der Fig. 7 bis 9 ist zu erkennen, dass in Fig. 7 die Schaltwelle 66 eine Axialstellung hat, in der das erste Sperrteil 68 aktiv ist, also das erste Sperrteil 68 den Rückwärtsgang an einer Bewegung hindert, die erforderlich wäre, um einen Rückwärtsgang einzulegen. Das erste Sperrteil 68 erstreckt sich dabei axial über einen Bereich, der so dimensioniert ist, dass sämtliche Vorwärtsgänge des Getriebes, bzw. des gleichen Teilgetriebes, eingelegt werden können, ohne dass das erste Sperrteil 68 dabei aus seiner Sperrstellung bewegt wird. In der Stellung gemäß Fig. 7 ist der Getriebeaktor 1 in einer Vorwärtsganggasse, bzw. kann in einer Vorwärtsganggasse sein.

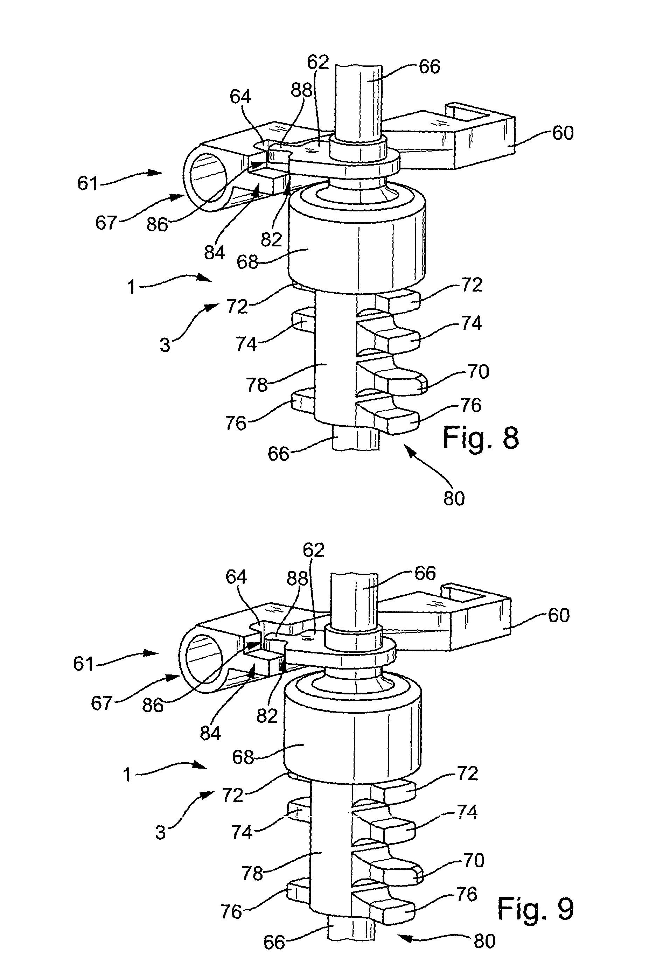

In Fig. 8 ist eine Axialstellung der Schaltwelle 66 gezeigt, in der der (zweite) Schaltfinger 62 bzw. dessen Bereich 88 in das Schaltmaul 64 der Schaltschiene 60 des Rückwärtsganges so eingreift, dass diese Schaltschiene 60 hier zum Ein- und Auslegen des Rückwärtsganges entsprechend betätigt werden kann. Hierbei ist nämlich das zweite Sperrteil 82 nicht in einer Sperrstellung, so dass durch dieses zweite Sperrteil 82 die Bewegung der Schaltschiene 60 des Rückwärtsganges nicht blockiert ist. Auch das erste Sperrteil 68 ist hier nicht in einer Sperrstellung, so dass auch hierdurch die Bewegung der Schaltschiene 60 des Rückwärtsganges nicht blockiert ist. Der Getriebeaktor 1 ist in der Stellung gemäß Fig. 8 in der Rückwärtsganggasse.

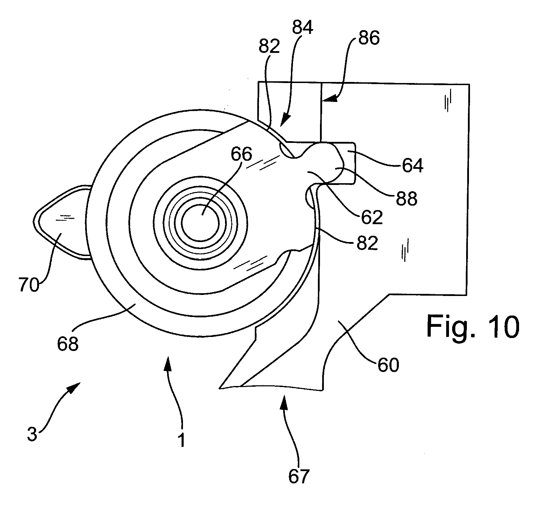

Die Fig. 9 und 10 zeigen jeweils eine Stellung, bei der der Bereich 88 des (zweiten) Schaltfingers 62 in das Schaltmaul 64 der Schaltschiene 60 für den Rückwärtsgang eingreift, wobei allerdings gleichzeitig das zweite Sperrteil 82 mit der ersten Profilierung 84 der Schaltschiene 60 so zusammenwirkt, dass durch ein Verdrehen der Schaltwelle 66 ein Rückwärtsgang nicht eingelegt werden kann, bzw. eine entsprechende Bewegung der Schaltschiene 60 des Rückwärtsganges blockiert ist. Der Getriebeaktor 1 bzw. der (zweite) Schaltfinger 62 ist hier (zumindest teilweise) unterhalb der Rückwärtsganggasse.

In der Stellung gemäß Fig. 7 wird also die Bewegung der Schaltschiene 60 des Rückwärtsganges mittels des ersten Sperrteils 68 blockiert, wobei insbesondere vorgesehen ist, dass das zweite Sperrteil 82 nicht blockierend auf diese Schaltschiene 60 einwirkt, und in der Stellung gemäß Fig. 9 wird die Bewegung der Schaltschiene 60 des Rückwärtsganges mittels des zweiten Sperrteils 82 blockiert, wobei insbesondere vorgesehen ist, dass das erste Sperrteil 68 nicht blockierend auf diese Schaltschiene 60 einwirkt; in der Stellung gemäß Fig. 8 wirkt keines der Sperrteile 68, 82 blockierend auf die Schaltschiene 60 des Rückwärtsganges ein. Fig. 10 zeigt eine Ansicht von oben.

In vorteilhafter Ausbildung weist dieser Getriebeaktor 1 eine vertikale Einbaulage auf. Dies ist insbesondere so, dass der Getriebeaktor 1 bzw. dessen Schaltwelle 66 vertikal ausgerichtet ist, wenn dieser Getriebeaktor 1 in einem Kraftfahrzeug verbaut ist. Bei einer solchen vertikalen Einbaulage kann allerdings die Gefahr bestehen, dass die Schaltwelle 66 bei einem Fehler oder einem Bauteilbruch innerhalb der Wählkinematik bzw. Wählmechanik nach unten fällt. In vorteilhafter Gestaltung ist - wie in Fig. 9 angedeutet - vorgesehen, dass die Rückwärtsganggasse im Getriebe - insbesondere in Bezug auf Stellungen der Schaltwelle 66 bzw. des Aktors 1, die zum Anfahren der Ganggassen angefahren werden müssen - in der untersten Stellung ist. Durch eine zuvor beschriebene Ausgestaltung des Rückwärtsganghebels bzw. des Betätigungselements 62 für das Ein- und Auslegen des Rückwärtsganges bzw. des (zweiten) Schaltfingers 62, bei dem dieses bzw. dieser mit einem zweiten Sperrteil 82 versehen ist, wird dabei (auch) - insbesondere wenn die tiefste Stellung (der Wählgasse) unterhalb der Rückwärtsganggasse liegt - ein unbeabsichtigtes Einlegen des Rückwärtsganges vermieden. Grundsätzlich könnte ansonsten nämlich die Gefahr bestehen, dass der Rückwärtsgang nach einem Fehler bzw. Bauteilbruch innerhalb der Wählkinematik bzw. Wählmechanik unbeabsichtigt eingelegt wird.

Dies soll allerdings nicht heißen, dass Ausgestaltungen mit dem angesprochenen zweiten Sperrteil 82 stets in Kombination mit einer vertikalen Ausrichtung, und insbesondere einer solchen vertikalen Ausrichtung, bei der die Rückwärtsganggasse - insbesondere bezogen auch die Axialstellung der Schaltwelle 66 - die am weitesten unten gelegen Ganggasse ist, kombiniert werden muss.

Es sei angemerkt, dass die Gestaltung gemäß den Fig. 7 bis 10 in einer bevorzugten Gestaltung mit einer Gestaltung gemäß den Fig. 1 bis 4 oder einer Gestaltung gemäß den Fig. 6 und 7 kombiniert ist.

Die Gestaltung gemäß den Fig. 7 bis 10 wird vorzugsweise bei einem Automatisierten Schaltgetriebe (ASG) oder einen Doppelkupplungsgetriebe (DKG) oder einen Parallelschaltgetriebe (PSG) eingesetzt.

Das erste Sperrteil 68 bzw. der erste Sperrzylinder 68 wird vorzugsweise von einem umfangsmäßig geschlossenen Zylinder gebildet. Dieser kann beispielsweise konzentrisch zur Schaltwelle 66 angeordnet sein. Das zweite Sperrteil 82 bzw. der zweite Sperrzylinder 82 wird bevorzugt von wenigstens einem, bevorzugt genau einem oder genau zwei, gewölbten Oberflächenabschnitt(en) gebildet, der bzw. die bevorzugt einen konstanten Radius aufweist, und auch als Radius am Schaltfinger bezeichnet wird.

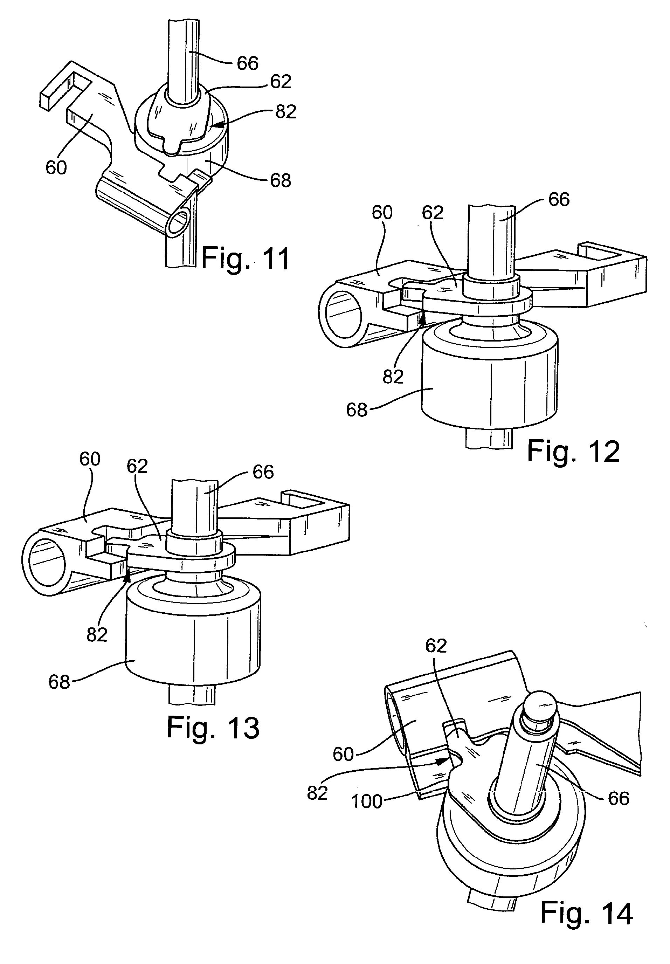

Ein solcher Radius am Schaltfinger, über den die Sperrung erfolgt ist in Fig. 14 mit dem Bezugszeichen 100 versehen.

Die Fig. 11 bis 14 zeigen eine beispielhafte erfindungsgemäße Gestaltung, die im Wesentlichen der Gestaltung gemäß den Fig. 7 bis 10 entspricht. Auch die in den Fig. 11 bis 14 gezeigten Stellungen entsprechen - in dieser Reihenfolge - im Wesentlichen den Stellungen gemäß den Fig. 7 bis 10. In der Gestaltung gemäß den Fig. 11 bis 14 ist allerdings im Vergleich zu den Fig. 7 bis 10 ein kleiner Ausschnitt gezeigt.

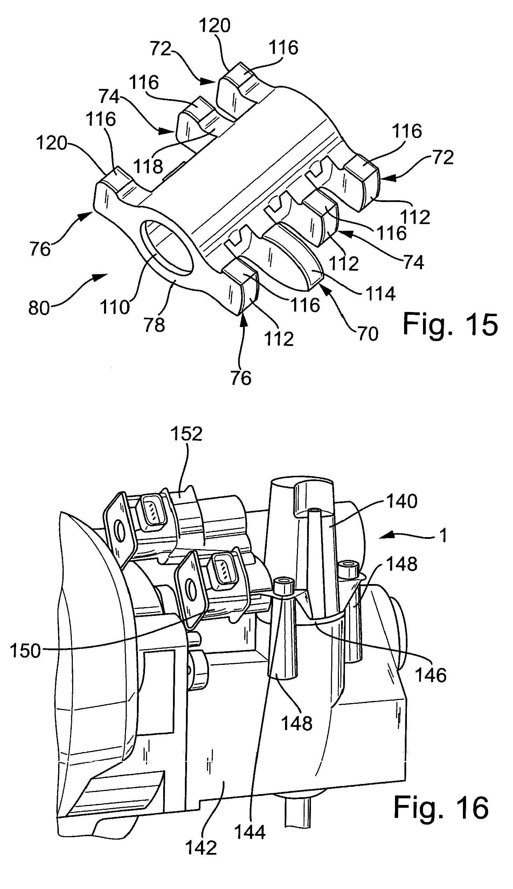

Anhand der Fig. 15 bis 19 sollen nun beispielhafte Weiterbildungen der anhand der Fig. 1 bis 14 erläuterten beispielhaften erfindungsgemäßen Gestaltungen erläutert werden. Die Gestaltungen gemäß den Fig. 15 bis 19 können einzeln oder in Kombination mit den anhand der Fig. 1 bis 14 erläuterten beispielhaften erfindungsgemäßen Gestaltungen kombiniert werden. Selbstverständlich können die anhand der Fig. 1 bis 14 erläuterten Gestaltungen auch auf andere Weise weitergebildet sein.

Fig. 15 zeigt einen beispielhaften Schalthebel 80 für einen Getriebeaktor 1. Dieser Schalthebel 80 ist einstückig ausgebildet und weist ein Hauptbetätigungselement 70 auf, das hier ein (erster) Schaltfinger ist, sowie mehrere Nebenbetätigungselemente 72, 74, 76 und eine Hülse 78.

Die Hülse 78 ist mit einer Aufnahmebohrung 110 für die Aufnahme der Schaltwelle 66 versehen. Diese Aufnahmebohrung 110 ist als Durchgangsbohrung gestaltet, kann aber auch als Sackbohrung ausgebildet sein.

Der erster Schaltfinger 70 sowie die Nebenbetätigungselemente 72, 74, 76 ragen radial von der Hülse 78 ab. Die Nebenbetätigungselemente 72, 74, 76 sind jeweils flügelartig ausgebildet und weisen zwei Hälften auf, die auf radial gegenüberliegenden Seiten von der Hülse 78 radial abragen.

Die Nebenbetätigungselemente 72, 74, 76 weisen radial außen gelegene Sperrzylinder bzw. Sperrzylinderflächen 112 auf, die allerdings nicht zu verwechseln sind mit dem ersten 68 oder zweiten Sperrteil 82, das oben angesprochen wurde.

Der in Fig. 15 gezeigte Schalthebel 80 des Getriebeaktors 1 besitzt als Hauptfunktionsflächen die Einlegeflächen bzw. Einlegegeometrie 114 zum Schalten der Gänge und die Auswerfer bzw. Auslegegeometrie 116 zum Auslegen der Gänge. Die Profile dieser Flächen 114, 116 sind in Bezug auf die Active Interlock-Funktionalität aufeinander abgestimmt. Neben diesen Hauptfunktionsflächen 114, 116 weist der Schalthebel 80 noch Nebenfunktionsflächen in Form von Fasen und / oder Radien 118, die bei kleinen Überschneidungen mit der inneren Schaltung dafür sorgen, dass der Schalt,- Wählvorgang nicht blockiert und die Bauteile aneinander vorbeigleiten können, und Auswerferkanten 120 auf. Zudem weisen die Nebenbetätigungselemente 72, 74, 76 bzw. die Auswerfer einen scharfkantigen Übergang von der Auswerferfläche bzw. Auslegegeometrie 116 zur Sperrzylinderfläche 112 auf. Die Auslegegeometrien 116, die Sperrzylinderflächen 112 sowie Nebenfunktionsflächen, also die Fasen und / oder Radien 118 und Auswerferkanten 120, werden jeweils an den Nebenbetätigungselementen 72, 74, 76 gebildet, und die Einlegegeometrie 114 wird am Hauptbetätigungselement 70 ausgebildet.

Die Nebenfunktionsflächen können beispielsweise hergestellt werden, indem die Profile mit einem kleinen Fräser einzeln abgefahren werden. Insbesondere bei Serienproduktion kann es unter Kostenaspekten allerdings vorteilhaft sein, dass der Schalthebel 80 als Schmiedeteil mit anschließender mechanischer Bearbeitung hergestellt wird. Dieses kann beispielsweise so sein, dass die Hauptfunktionsflächen und die Nebenfunktionsflächen direkt durch den Schmiedeprozess erzeugt werden. Insbesondere bei den Nebenbetätigungselementen 72, 74, 76 existiert die Übergangsproblematik zwischen Hauptfunktionsflächen und Nebenfunktionsflächen dabei nicht mehr bzw. ist geringer, da man die natürlichen Übergangsradien des Schmiedegesenkes ausnutzt. Die nachfolgende Bearbeitung ist eine einfache Drehoperation zur Erzeugung der Aufnahmebohrung 110 und des Sperrzylinders 112. Dabei wird auf natürliche Weise der scharfe Übergang zwischen Auswerferfläche 116 und Sperrzylinder 112 erzeugt.

Die Anzahl der die Nebenbetätigungselemente 72, 74, 76 hängt insbesondere von der Anzahl der Gänge des Getriebes bzw. der Anzahl der Gänge der Teilgetriebe ist, und ist vorzugsweise so gewählt, dass die Active-Interlock-Funktionalität gewährleistet wird.

In vorteilhafter Weiterbildung der Gestaltung gemäß den Fig. 1 bis 4 oder der Gestaltung gemäß den Fig. 5 und 6 oder der Gestaltung gemäß den Fig. 7 bis 10 oder der Gestaltung gemäß den Fig. 11 bis 14 kann der beispielhafte Schalthebel 80 gemäß Fig. 15 in diesen Gestaltungen - insbesondere dreh- und axialfest - auf der Schaltwelle 58 bzw. 66 angeordnet sein.

In vorteilhafter Gestaltung ist der erfindungsgemäße Getriebeaktor 1, und insbesondere ein entsprechend einer der vorstehenden Figuren(beschreibungen) ausgebildeter beispielhafter erfindungsgemäßer Getriebeaktor 1, an einem Getriebegehäuse montiert bzw. fixiert, und insbesondere verschraubt. Hierbei kann der Getriebeaktor 1 ganz oder teilweise in einem Aktorgehäuse aufgenommen sein, wobei insbesondere dieses Aktorgehäuse am Getriebegehäuse verschraubt sein kann. Weiter kann vorgesehnen sein, dass der Getriebeaktor 1 bzw. das Aktorgehäuse gegenüber dem Getriebegehäuse abgedichtet ist. Dabei kann beispielsweise vorgesehen sein, dass eine Dichtebene und eine Anschraubebene ausgebildet wird, welche Bestandteil der Schnittstelle zwischen dem Getriebeaktor 1 und dem Getriebegehäuse sind oder diese bilden.

Gemäß einer bevorzugten Gestaltung ist dabei vorgesehen, dass die Dichtebene und die Anschraubebene zusammenfallen.

Fig. 16 zeigt weitere, abgewandelte bevorzugte Gestaltung, bei der Getriebeaktor 1 bzw. ein Aktorgehäuse 140 am Getriebegehäuse 142 angeschraubt und gegenüber diesem abgedichtet ist, wobei allerdings die Anschraubebene 144 von der Dichtebene 146 voneinander beabstandet sind, bzw. diese Ebenen getrennt sind. Dieses ist hier so, dass die Anschraubebene 144 gegenüber der Dichtebene 146 nach oben verlagert ist. Zu diesem Zweck sind (aufgesetzte) Anschraubdome 148 vorgesehen. Diese Anschraubdome 148 werden in diesem Beispiel am Getriebegehäuse 142 ausgebildet. Bei einer solchen Gestaltung wird beispielsweise ermöglicht beispielsweise, den Schwerpunkt des Wählmotors 150 direkt in die Trennfuge der Verschraubung zu legen. Dadurch entsteht in Bezug auf Schwingungen ein sehr stabiler Verband. Auch in Bezug auf den Bauraum im Getriebeinneren kann eine solche Gestaltung Vorteile bieten.

Beim in Fig. 16 gezeigten Ausführungsbeispiel weist der Getriebeaktor 1 zwei Elektromotoren, nämlich den Wählmotor 150 und dem Schaltmotor 152, auf. Es kann beispielsweise alternativ aber auch vorgesehen sein, dass der Getriebeaktor 1 nur einen Elektromotor aufweist, der Antriebsbewegungen für das Wählen und für das Schalten erzeugt.

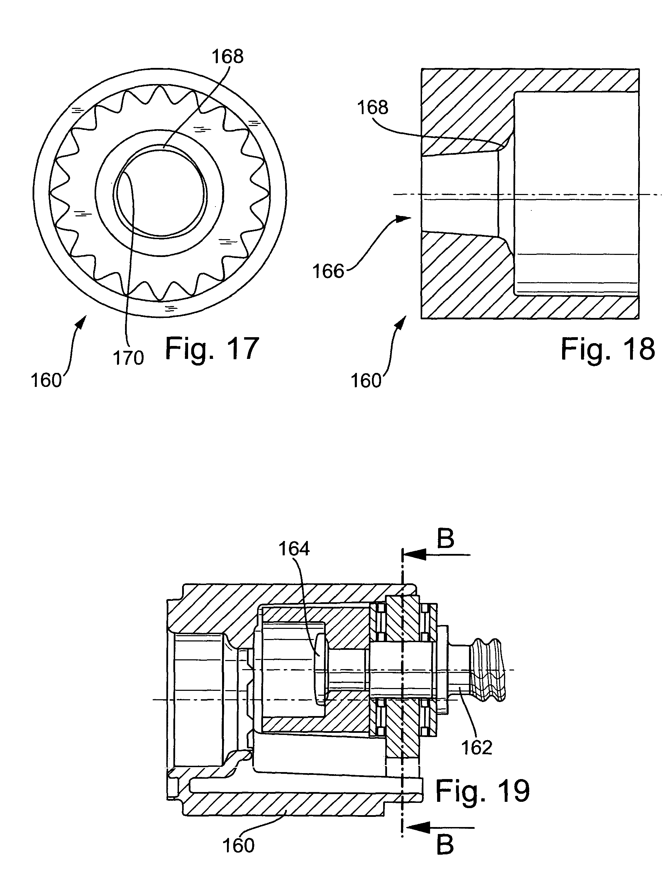

Ein erfindungsgemäßer Getriebeaktor 1, und insbesondere ein erfindungsgemäßer Getriebeaktor 1 gemäß den Ausführungsbeispielen, die anhand der Fig. 1 bis 4 bzw. der Fig. 5 und 6 bzw. der Fig. 7 bis 10 bzw. der Fig. 11 bis 14 erläutert wurden, kann beispielsweise eine Spindel aufweisen. Weiter kann vorgesehen sein, dass der Getriebeaktor 1 ein Hohlradgetriebe aufweist. Beispielhafte Ausgestaltungen eines erfindungsgemäßen Getriebeaktors 1, bei dem weiterbildend eine Spindel und ein Hohlradgetriebe vorgesehen sind, und dessen Ausgestaltung insbesondere auch mit den Gestaltungen gemäß den angesprochenen Fig. 1 bis 14 kombiniert sein können, sollen im Folgenden anhand der Fig. 17 bis 19 erläutert werden.

Gemäß der bevorzugten Weiterbildung besitzt der Getriebeaktor 1 als erste Übersetzungsstufe ein Hohlradgetriebe. Das Antriebsritzel wird darin durch die Motorwelle gebildet, das Antriebselement ist ein Hohlrad 160, das auf der Spindel 162 sitzt. Das Antriebsmoment des Hohlrades 160 wird auf die Spindel übertragen werden.

Hierzu kann gemäß einer bevorzugten Gestaltung - was in den Fig. 17 bis 19 nicht gezeigt ist - eine Mitnahmeverzahnung verwendet werden. Die Herstellung der Mitnahmeverzahnung auf der Spindel 162 wird in einem zusätzlichen Arbeitsschritt gerollt. Im Hohlrad 160 entsteht die Mitnahmeverzahnung beispielsweise durch die Profilierung des Stempels bei einem Sinterprozess quasi automatisch. Problematisch kann allerdings die Gratbildung beim Sintern sein. Der entstehende Grat behindert das Fügen der beiden Teile und muss bei der Fertigung des Hohlrades permanent überwacht werden.

Durch das Lagerkonzept der Spindel 162 stützt sich die große Axialkraft am Hohlrad 160 ab. Die Spindel 162 benötigt hierzu eine axiale Sicherung, die in der Lage ist, diese großen Kräfte aufzunehmen. Das erfolgt bevorzugt durch Vertaumeln des freien Spindelendes. Der entstehende Schließkopf 164 sollte in der Lage sein die Axialkräfte aufzunehmen, und dient insbesondere der axialen Sicherung.

Bei der Gestaltung gemäß den Fig. 17 bis 19 wird ein Nietprozess dazu genutzt, einen Formschluss in Umfangsrichtung zu erzeugen. Damit entfällt der Arbeitsgang "Rollen" bei der Spindelfertigung und die Herstellung bzw. Qualitätskontrolle des Hohlrades 160 vereinfacht sich.

Um das zu erreichen erhält das Hohlrad 160 eine spezielle Aufnahmekontur 166. Zur Zentrierung auf der Spindel 162 beginnt die Innenkontur 166 mit einem Zylinder. Dann öffnet sich der Zylinder und geht kontinuierlich in ein Polygonprofil 168 über. Der Innenkreis des Polygonprofils 168 entspricht dabei dem Zylinderdurchmesser. Beim Vertaumeln der Spindel 162 wird das Spindelmaterial in das Polygon des Hohlrades 160 gedrückt, so dass eine formschlüssige Drehmomentmitnahme und ein sehr stabiler "Schließkopf" 164 zur Aufnahme der großen Axialkräfte entsteht.

Fig. 17 zeigt dieses mit einem Polygonprofil 168 ausgebildet Hohlrad 160 von vorne, und Fig. 18 zeigt das Hohlrad gemäß Fig. 17 im Schnitt. In den Fig. 17 und 18 ist der Zentrierdurchmesser mit dem Bezugszeichen 170 bezeichnet. Fig. 19 zeigt eine Gestaltung, bei der das Hohlrad 160 gemäß den Fig. 17 und 18 mit der Spindel 162 zusammengebaut ist.

### Bezugszeichenliste

- 1: Getriebeaktor
- 2: Kulisse bzw. Schaltkulisse
- 3: Getriebeeinrichtung
- 10: erstes Kulissenteil, hier Achse bzw. Welle
- 12: zweites Kulissenteil, hier Kulissenblech
- 14: Einstich bzw. Nut in 10
- 16: Einstich bzw. Nut in 10
- 16a: Nutgrund von 16
- 18: Einstich bzw. Nut in 10
- 18a: Nutgrund von 18
- 20: Einstich bzw. Nut in 10
- 22: Einstich bzw. Nut in 10
- 24: 14 begrenzender der Wandabschnitt von 10
- 26: 14 begrenzender der Wandabschnitt von 10
- 28: (Profilierungs)erhöhung bzw. radialer Vorsprung gegenüber 16a, 18a von 10
- 30: Durchgangsöffnung in 12
- 32: zentrale Längsachse der Schaltwelle
- 34: radial außen gelegener Abschnitt von 12, Kreisbogen
- 36: Vertiefung von 12
- 38: Bereich von 12, welcher in 14 bzw. 16 bzw. 18 bzw. 20 bzw. 22 schwenken kann
- 40: Bereich von 12, welcher in 14 bzw. 16 bzw. 18 bzw. 20 bzw. 22 schwenken kann
- 42: Einführfase an 10
- 56: Zahnrad auf 58
- 58: Schaltwelle
- 60: Schaltschiene für Rückwärtsgang
- 61: inneren Getriebeschaltung
- 62: Betätigungselement für Ein- und Auslegen des Rückwärtsganges, zweiter Schaltfinger
- 64: Schaltmaul von 60
- 66: Schaltwelle
- 67: Endausgangsmechnismus von 61 des Rückwärtsganges
- 68: erstes Sperrteil, insbesondere Sperrzylinder für Rückwärtsgang
- 70: Hauptbetätigungselement von 80
- 72: Nebenbetätigungselement von 80
- 74: Nebenbetätigungselement von 80
- 76: Nebenbetätigungselement von 80
- 78: Hülse von 80
- 80: Schalthebel
- 82: zweites Sperrteil bzw. zweiter Sperrzylinder
- 84: erste Profilierung von 60
- 86: zweite Profilierung von 60
- 88: Bereich von 62
- 100: Radius an 62
- 110: Aufnahmebohrung von 80
- 112: Sperrzylinderfläche von 72 bzw. 74 bzw. 76
- 114: Einlegeflächen bzw. Einlegegeometrie
- 116: Auswerfer bzw. Auslegegeometrie
- 118: Radius bzw. Fase an 80 bzw. 72, 74, 76
- 120: Auswerferkante an 80 bzw. 72, 74, 76
- 140: Aktorgehäuse
- 142: Getriebegehäuse
- 144: Anschraubebene zwischen 1 bzw. 140 und 142
- 146: Dichtebene zwischen 1 bzw. 140 und 142
- 148: Anschraubdom an 140
- 150: Wählmotor von 1
- 152: Schaltmotor von 1
- 160: Hohlrad von 1
- 162: Spindel von 1
- 164: Schließkopf von 1
- 166: Aufnahmekontur von 160
- 168: Polygonprofil von 160
- 170: Zentrierdurchmesser von 160

## Patentansprüche

1. Getriebeaktor für eine Kraftfahrzeug-Getriebeeinrichtung (3), die für die Bildung von Gängen mehrere Übersetzungsstufen aufweist, wobei der Getriebeaktor (1) eine Schaltwelle (58, 66) aufweist, die für das Schalten von Gängen drehbeweglich gelagert ist und die für das Wählen von Gängen und axial verschieblich gelagert ist, und wobei der Getriebeaktor (1) ferner eine Kulisse (2) aufweist, **dadurch gekennzeichnet, dass** die Kulisse (2) ein fest angeordnetes erstes Kulissenteil (10) aufweist, welches insbesondere eine Welle oder eine Achse ist, sowie ein axialbeweglich und dreh- bzw. schwenkbeweglich angeordnetes zweites Kulissenteil (12), welches insbesondere eine Scheibe oder ein Blech ist und welches mit der Schaltwelle (58, 66) gekoppelt ist, und dass das erste Kulissenteil (10) mehrere axial beabstandete Vertiefungen (14, 16, 18, 20, 22) aufweist, in welche das zweite Kulissenteil (12) in Abhängigkeit seiner Axialstellung jeweils schwenkbar ist.

2. Getriebeaktor nach Anspruch 1, **dadurch gekennzeichnet, dass** das erste Kulissenteil (10) im Wesentlichen rotationssymmetrisch ausgebildet ist.

3. Getriebeaktor nach einem der vorangehenden Ansprüche, **dadurch gekennzeichnet, dass** die axial beabstandeten Vertiefungen (14, 16, 18, 20, 22) des ersten Kulissenteils (10) jeweils als Nut, insbesondere Ringnut, ausgebildet sind.

4. Getriebeaktor nach einem der vorangehenden Ansprüche, **dadurch gekennzeichnet, dass** die Anzahl der axial beabstandeten Vertiefungen (14, 16, 18, 20, 22) des ersten Kulissenteils (10) der Anzahl der Schaltgassen des Getriebeaktors (1) entspricht.

5. Getriebeaktor nach einem der vorangehenden Ansprüche, **dadurch gekennzeichnet, dass** die axial beabstandeten Vertiefungen (14, 16, 18, 20, 22) des ersten Kulissenteils (10) jeweils von gegenüberliegenden Wandabschnitten (24, 26) begrenzt werden, die radial außen mit Einführfasen (42) versehen sind.

6. Getriebeaktor nach einem der vorangehenden Ansprüche, **dadurch gekennzeichnet, dass** die axial beabstandeten Vertiefungen (14, 16, 18, 20, 22) des ersten Kulissenteils (10) verschiedenen Schaltgassen des Getriebeaktors (1) zugeordnet sind und dass in den Stellungen des Getriebeaktors (1), in denen dieser außerhalb einer Schaltgasse positioniert ist, das erste (10) und das zweite Kulissenteil (12) zum Blockieren einer Schwenkbewegbarkeit des zweiten Kulissenteils (12) formschlüssig ineinander greifen.

7. Getriebeaktor nach einem der vorangehenden Ansprüche, **dadurch gekennzeichnet, dass** in Stellungen des zweiten Kulissenteils (12), in welchen dieses zweite Kulissenteil (12) in eine Vertiefung (14 bzw. 16 bzw. 18 bzw. 20 bzw. 22) der axial beabstandeten Vertiefungen (14, 16, 18, 20, 22) des ersten Kulissenteils (10) verschwenkt ist, zwischen dem ersten (10) und dem zweiten Kulissenteils (12) ein Formschluss in Wählrichtung bzw. in Axialrichtung des ersten Kulissenteils (10) gegeben ist, so dass das Wählen bzw. eine Axialbewegung der ersten Kulissenteils (10), und somit eine Axialbewegung der Schaltwelle (58, 66) gesperrt bzw. blockiert ist.

8. Getriebeaktor nach einem der vorangehenden Ansprüche, **dadurch gekennzeichnet**, für ein Kraftfahrzeug-Getriebeeinrichtung (3), die eine innere Getriebeschaltung (61) mit mehreren Endausgangsmechanismen (67) aufweist, mittels welcher die Gänge der Kraftfahrzeug-Getriebeeinrichtung (3) ein- und auslegbar sind, wobei der Getriebeaktor (1) wenigstens ein Hauptbetätigungselement (70), wie erster Schaltfinger, für das Betätigen von Endausgangsmechanismen (67) zum Einlegen von Gängen aufweist sowie mehrere Nebenbetätigungselemente (72, 74, 76) für das Betätigen von Endausgangsmechanismen (67) zum Auslegen von Gängen aufweist, wobei das wenigstens eine Hauptbetätigungselement (70) für das Wählen von Gängen axialbeweglich und für das Einlegen von Gängen drehbeweglich ist, und wobei die Nebenbetätigungselemente (72, 74, 76) für das Auslegen von Vorwärtsgängen drehbeweglich sind, wobei insbesondere vorgesehen ist, dass das wenigstens ein Hauptbetätigungselement (70) und die Nebenbetätigungselemente (72, 74, 76), vorzugsweise axial- und drehfest, an bzw. auf der Schaltwelle (58, 66) angeordnet sind.

9. Getriebeaktor nach einem der vorangehenden Ansprüche, **dadurch gekennzeichnet, dass** sich die Schaltwelle (58, 66) parallel zur Längsachse des ersten Kulissenteils (10) erstreckt.

10. Getriebeaktor, insbesondere nach einem der vorangehenden Ansprüche, für eine Kraftfahrzeug-Getriebeeinrichtung (3), die für die Bildung von Gängen mehrere Übersetzungsstufen aufweist und die eine innere Getriebeschaltung (61) mit mehreren Endausgangsmechanismen (67) aufweist, von denen einer für das Betätigen eines Rückwärtsganges der Getriebeeinrichtung (3) ist und von denen die verbleibenden für das Betätigen von Vorwärtsgängen der Getriebeeinrichtung (3) sind, wobei der Getriebeaktor (1) zumindest ein Hauptbetätigungselement (70), wie erster Schaltfinger, für das Betätigen der den Vorwärtsgängen zugeordneten Endausgangsmechanismen zum Einlegen von Gängen aufweist sowie mehrere Nebenbetätigungselemente (72, 74, 76) für das Betätigen der den Vorwärtsgängen zugeordneten Endausgangsmechanismen zum Auslegen von Gängen, wobei weiter ein Betätigungselement (62), insbesondere (zweiter) Schaltfinger, für das Betätigen des dem Rückwärtsgang zugeordneten Endausgangsmechanismus (67) zum Einlegen und zum Auslegen des Rückwärtsganges vorgesehen ist.

11. Getriebeaktor nach Anspruch 10, **dadurch gekennzeichnet, dass** ein erstes Sperrteil (68), insbesondere erster Sperrzylinder, für das sperrende Einwirken auf den dem Rückwärtsgang zugeordneten Endausgangsmechanismus (67) vorgesehen ist, um diesen in einer Neutralstellung zu halten, in welcher der Rückwärtsgang ausgelegt ist, wobei das wenigstens eine Hauptbetätigungselement (70) für das Wählen axialbeweglich und für das Einlegen von Gängen drehbeweglich ist, und wobei die Nebenbetätigungselemente (72, 74, 76) für das Auslegen von Vorwärtsgängen drehbeweglich sind, und wobei das Betätigungselement (62) für das Wählen axialbeweglich und für das Einlegen und Auslegen des Rückwärtsganges drehbeweglich ist, und wobei ferner das erste Sperrteil (68) sich axial über eine Länge erstreckt, die mindest so groß ist wie der maximale axiale Abstand zweier Stellungen des wenigstens einen Hauptbetätigungselements (70), aus denen jeweils durch Verdrehen des wenigstens einen Hauptbetätigungselements (70) ein einem Vorwärtsgang zugeordneter Endausgangsmechanismus zum Einlegen eines Vorwärtsgangs betätigbar ist.

12. Getriebeaktor nach einem der Ansprüche 10 und 11, **dadurch gekennzeichnet, dass** das wenigstens ein Hauptbetätigungselement (70), das für das Betätigen der den Vorwärtsgängen zugeordneten Endausgangsmechanismen zum Einlegen von Gängen vorgesehen ist, und die Nebenbetätigungselemente (72, 74, 76), die für das Betätigen der den Vorwärtsgängen zugeordneten Endausgangsmechanismen zum Auslegen von Gängen vorgesehen sind, und das Betätigungselement (62), das für das Betätigen des dem Rückwärtsgang zugeordneten Endausgangsmechanismus (67) zum Einlegen und zum Auslegen des Rückwärtsganges vorgesehen, relativ zueinander axialfest und drehfest gekoppelt sind, und gegebenenfalls jeweils fest an oder auf einer Schaltwelle (58, 66) angeordnet sind.

13. Kraftfahrzeug-Getriebeeinrichtung mit mehreren Übersetzungsstufen für die Bildung von Gängen und mit einer inneren Getriebeschaltung (61) und mit einem Getriebeaktor (1) für die Betätigung der inneren Getriebeschaltung (61) für das Einlegen und Auslegen von Gängen, **dadurch gekennzeichnet, dass** der Getriebeaktor (1) gemäß einem der vorangehenden Ansprüche ausgebildet ist.

14. Kraftfahrzeug-Getriebeeinrichtung nach Anspruch 13, **dadurch gekennzeichnet, dass** Kraftfahrzeug-Getriebeeinrichtung (3) als Parallelschaltgetriebe gestaltet ist.

15. Kraftfahrzeug-Getriebeeinrichtung nach einem der Ansprüche 13 und 14, **dadurch gekennzeichnet, dass** die innere Getriebeschaltung (61) mehrere Schaltschienen (60) aufweist, die jeweils mit einem Schaltmaul (64) versehen sind, das für den betätigenden Eingriff der Haupt- (70) und Nebenbetätigungselemente (72, 74, 76) bzw. des Betätigungselements (62) vorgesehen ist.

16. Kraftfahrzeug-Antriebsstrang mit einer Kraftfahrzeug-Getriebeeinrichtung (3) gemäß einem der Ansprüche 13 bis 15.
